(19) Europäisches Patentamt / European Patent Office / Office européen des brevets

(11) **EP 4 201 041 B1**

(12) **EUROPEAN PATENT SPECIFICATION**

(45) Date of publication and mention
of the grant of the patent:
**25.02.2026 Bulletin 2026/09**

(21) Application number: **20952872.8**

(22) Date of filing: **14.09.2020**

(51) International Patent Classification (IPC):
*H04L 51/00* (2022.01)    *G09B 5/06* (2006.01)
*G06V 40/16* (2022.01)    *G06Q 10/10* (2023.01)
*G06Q 50/20* (2012.01)    *G06V 40/18* (2022.01)
*G06V 40/20* (2022.01)    *G09B 5/10* (2006.01)

(52) Cooperative Patent Classification (CPC):
**G09B 5/10; G06V 40/171; G06V 40/174;
G06V 40/18; G06V 40/20; G09B 5/06;**
G06Q 10/103; G06Q 50/20

(86) International application number:
**PCT/CN2020/114970**

(87) International publication number:
**WO 2022/052084 (17.03.2022 Gazette 2022/11)**

(54) **METHODS, SYSTEMS, AND MEDIA FOR CONTEXT-AWARE ESTIMATION OF STUDENT ATTENTION IN ONLINE LEARNING**

VERFAHREN, SYSTEME UND MEDIEN ZUR KONTEXTBEWUSSTEN SCHÄTZUNG DER STUDENTENAUFMERKSAMKEIT BEIM ONLINE-LERNEN

PROCÉDÉS, SYSTÈMES ET SUPPORTS DESTINÉS À UNE ESTIMATION SENSIBLE AU CONTEXTE DE L'ATTENTION D'UN ÉTUDIANT LORS D'UN APPRENTISSAGE EN LIGNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.06.2023 Bulletin 2023/26**

(73) Proprietor: **Huawei Technologies Co., Ltd.
Shenzhen, Guangdong 518129 (CN)**

(72) Inventors:
• **ZHOU, Wei**
  **Shenzhen, Guangdong 518129 (CN)**
• **HOSSEINKHANI LOORAK, Mona**
  **Shenzhen, Guangdong 518129 (CN)**
• **MIZOBUCHI, Sachi**
  **Shenzhen, Guangdong 518129 (CN)**
• **YI, Xiu**
  **Shenzhen, Guangdong 518129 (CN)**
• **YE, Juntao**
  **Shenzhen, Guangdong 518129 (CN)**
• **HU, Liang**
  **Shenzhen, Guangdong 518129 (CN)**
• **LI, Wei**
  **Shenzhen, Guangdong 518129 (CN)**

(74) Representative: **Isarpatent
Patent- und Rechtsanwälte Barth
Charles Hassa Peckmann & Partner mbB
Friedrichstrasse 31
80801 München (DE)**

(56) References cited:
CN-A- 107 920 280      CN-A- 108 021 893
CN-A- 111 242 049      US-A1- 2010 081 116
US-A1- 2015 270 983

**Description**

**FIELD**

The present disclosure is related to methods, systems, and processor-readable media for online learning, and in particular to methods, systems, and processor-readable media for context-aware estimation of student attention during online learning.

**BACKGROUND**

A key issue in education is to improve students' engagement and attention to their educational activities. It is widely acknowledged that the engagement and affect of students are linked to increased productivity and learning gains. In order to improve student attention levels, a teacher typically must be able to collect feedback regarding student attention levels during a presentation or other educational session. Knowing whether a student is engaged in an educational setting (in-person or online) may be helpful in designing an adaptive learning system and intelligent tutoring systems that can help both teachers and students.

The problems of collecting feedback is particularly difficult in online learning, as the teacher cannot observe all the students at the same time. Accordingly, automatic systems that can measure students' attention levels may be particularly useful in the context of online learning.

A number of systems and methods of estimating students' attention or engagement have been proposed. For example, US Patent Application Publication No. 2015/0099255A1, entitled "ADAPTIVE LEARNING ENVIRONMENT DRIVEN BY REAL-TIME DENTIFICATION OF ENGAGEMENT LEVEL", proposes an online education system which estimates students' engagement based on facial motion capture, eye tracking, speech recognition and gesture or posture, and reports the summarized estimation results. A similar approach is described in Zaletelj, J., & Košir, A. (2017), *Predicting students' attention in the classroom from Kinect facial and body features,* EURASIP journal on image and video processing, 2017(1), 80, estimating students' attention in the classroom using a Microsoft™ Kinect™ camera system to detect facial and body features of students. A third similar approach is described in Monkaresi, H., Bosch, N., Calvo, R. A., & D'Mello, S. K. (2016), Automated detection of engagement using video-based estimation of facial expressions and heart rate, IEEE Transactions on Affective Computing, 8(1), 15-28. In each of these existing approaches, student attention is monitored throughout a session (e.g., a class session or presentation by a teacher) to determine a student's attention or engagement level.

US 2015/0270983 A1 describes a method of utilizing eye tracking to determine attendee engagement. The method includes: during a play of the presentation, tracking eye positions of a set of control party(ies); during a play of the presentation, tracking eye positions of a set of non-control party(ies); determining a set of divergence value(s) corresponding to divergence between the eye position(s) of the control party(ies) and the non-control party(ies); and determining a disengagement value corresponding to relative disengagement of the non-control party(ies) based, at least in part on the set of divergence value(s).

**SUMMARY**

In various embodiments described herein, methods, systems and processor-readable media, as defined in the appended set of claims, are disclosed that provide context-aware estimation of student attention in online learning. In contrast to existing approaches, which monitor student attention levels throughout an entire class session or presentation, the present disclosure describes embodiments that filter or restrict the time periods in which student attention is monitored or assessed to those time periods in which student attention is important. These time periods of high attention importance may be determined by processing data from the teacher, such as audio data representing the teacher's voice and/or visual presentation data representing slides or other visual material being presented to the students. By limiting attention monitoring to periods in which attention is important, embodiments described herein may achieve a more accurate and relevant measure of student engagement with educational content, which may be a more useful and relevant metric for measuring progress toward the desired objectives (e.g., student success and learning gains) than overall student attention levels during an entire class session.

Thus, in some embodiments, a context-aware data sampling technique may be used for attention estimation, focusing on how to filter student attention data before processing. This may not only improve the quality and effectiveness of attention estimation as described above, but may also save machine power used to process the data.

As used herein, the terms "teacher" and "presenter" may be used interchangeably, as may the terms "student" and "attendee". It will be appreciated that the term "attendee" does not refer to someone physically present at an event, but rather to someone who is expected to attend to, i.e. pay attention to, a presentation. The term "participant" may refer to an attendee or a presenter participating in a presentation or other educational or communication session.

As used herein, a statement that an element is "for" a particular purpose may mean that the element performs a certain function or is configured to carry out one or more particular steps or operations, as described herein.

As used herein, statements that a second element is "based on" a first element may mean that characteristics of the second element are affected or determined at least in part by characteristics of the first element. The first element may be considered an input to an operation or calculation, or a series of operations or computations, that which produce the second element as an output that is not independent from the first element.

In some aspects, the present disclosure describes a method, performed by an attention monitoring system, for estimating attendee attention. The method comprises receiving, from a presenter device, presenter data corresponding to a presentation period. The method comprises receiving, from an attendee device, attendee data corresponding to at least a portion of the presentation period. The method comprises processing the presenter data to identify one or more periods of the presentation period as high attention importance and one or more periods of the presentation period as low attention importance. The method comprises processing the attendee data to determine an attendee attention level during the one or more periods of high attention importance.

In some examples, the method further comprises sending feedback information indicating the attendee attention level to the presenter device.

In some examples, the presenter data includes audio data, and processing the presenter data comprises processing the audio data to determine that a presenter is speaking during the one or more periods of high attention importance.

In some examples, processing the audio data to determine that the presenter is speaking comprises processing the audio data to distinguish between speech sounds and non-speech sounds of the audio data.

In some examples, the presenter data further includes textual presentation data, and processing the presenter data comprises processing the audio data to identify the content of the presenter's speech. Processing the textual presentation data to determine that the content of the presenter's speech corresponds to the textual presentation data.

In some examples, the presenter data includes visual presentation data, and processing the presenter data comprises processing the visual presentation data to determine that a visual characteristic of the visual presentation data has changed.

In some examples, the visual characteristic of the visual presentation data comprises presenter pointer movement.

In some examples, the presenter data includes visual presentation data indicating content of a visual presentation, and presenter interaction data indicating an interaction of the speaker with the visual presentation. Identifying the one or more periods of the presentation period as high attention importance comprises processing the visual presentation data and the presenter interaction data to determine that the presenter is interacting with the visual presentation.

In some examples, the attendee data includes video data comprising a plurality of frames of a video of the attendee captured by a camera of the attendee device. Processing the attendee data comprises processing the video data to determine an attendee gaze direction in one or more of the plurality of frames.

In some examples, the presenter data includes one or more annotations indicating the one or more periods of high attention importance of the presentation period. Processing the presenter data comprises processing the annotations to identify the one or more periods of the presentation period as high attention importance.

In some examples, the method further comprises identifying a plurality of intervals of the presentation period. Determining the attendee attention level comprises, for each interval, determining an attendee attention level for the interval during the overlap of the interval and the one or more periods of the presentation period identified as high attention importance.

In some examples, the method further comprises sending, to the presenter device, feedback information indicating the attendee attention level for each interval.

In some examples, the plurality of intervals correspond to a plurality of presenter speech segments, the presenter data includes audio data, and identifying the plurality of intervals comprises processing the audio data to identify the plurality of presenter speech segments.

In some examples, the plurality of intervals correspond to a plurality of visual presentation segments. The presenter data includes visual presentation data. Identifying the plurality of intervals comprises processing the visual presentation data to identify the plurality of visual presentation segments.

In some examples, identifying one or more periods of high attention importance and one or more periods of low attention importance comprises determining an attention importance level for a plurality of periods of the presentation period, identifying one or more of the plurality of periods of the presentation period as high attention importance when the attention importance level is above an attention importance threshold value, and identifying one or more of the periods of the presentation period as low attention importance when the attention importance level is below the attention importance threshold value.

In some aspects, the present disclosure describes a method, performed by an attention monitoring system, for estimating attendee attention. The method comprises receiving, from a presenter device, presenter data corresponding to a presentation period, the presenter data including audio data and visual presentation data. The method comprises receiving, from an attendee device, attendee data corresponding to at least a portion of the presentation period, the attendee data including video data comprising a plurality of frames of a video of the attendee captured by a camera of the attendee device. The method comprises identifying a plurality of intervals of the presentation period corresponding to a plurality of visual presentation segments based on the visual presentation data. The method comprises processing the presenter data to identify one or more periods of the presentation period as high attention importance and one or more periods of the presentation period as low attention importance by processing the audio data to determine that a presenter is speaking during the one or more periods of high attention importance by distinguishing between speech sounds and non-speech sounds of the audio data, and processing the visual presentation data determine that slide content of the visual presentation data has changed. The method comprises processing the attendee data to, for each interval, determine an attendee attention level for the interval during the overlap of the interval and the one or more periods of high attention importance by processing the video data to determine an attendee gaze direction in one or more of the plurality of frames. The method comprises sending, to the presenter device, feedback information indicating the attendee attention level for each interval.

In some examples, identifying one or more periods of the presentation period as high attention importance comprises, for each period of high attention importance, processing the presenter data to identify a minimum attendee attention level required for the period.

In some examples, the method further comprises, for each period of high attention importance, processing the attendee data to determine whether the attendee attention level for the period is at least the minimum attendee attention level required for the period.

In some examples, the method further comprises sending feedback information to the presenter device. The feedback information indicates, for each period of high attention importance, whether the attendee attention level for the period is at least the minimum attendee attention level required for the period.

In some examples, the method further comprises sending feedback information indicating the attendee attention level to the attendee device.

In some aspects, the present disclosure describes an attention monitoring system for estimating attendee attention. The attention monitoring system comprises a processor device a memory storing instructions that, when executed by the processor device, cause the system to perform the method steps above.

In some aspects, the present disclosure describes a processor-readable medium having tangibly stored thereon instruction that, when executed by a processor device, cause the processor device to perform the method steps described above.

## BRIEF DESCRIPTION OF THE DRAWINGS

Reference will now be made, by way of example, to the accompanying drawings which show example embodiments of the present application, and in which:

FIG. 1 is a schematic diagram of a video conferencing system for online learning, suitable for implementing various embodiments of the present disclosure;

FIG. 2A is a block diagram of a client device of the video conferencing system of FIG. 1 in accordance with various embodiments of the present disclosure;

FIG. 2B is a block diagram of a video conferencing server of the video conferencing system of FIG. 1 in accordance with various embodiments of the present disclosure;

FIG. 3 is a flowchart showing the steps of a method performed by an attention monitoring system for estimating attendee attention, in accordance with various embodiments of the present disclosure;

FIG. 4 is a flowchart showing the steps of a first example method performed by an attention monitoring system for identifying periods of high and low attention importance during a presentation period using audio data included in the presenter data according to the method of FIG. 3;

FIG. 5 is a flowchart showing the steps of a second example method performed by an attention monitoring system for identifying periods of high and low attention importance during the presentation period using presentation interaction data included in the presenter data according to the method of FIG. 3;

FIG. 6 is a flowchart showing the steps of a third example method performed by an attention monitoring system for identifying periods of high and low attention importance during the presentation period using annotations included in a pre-recorded presentation according to the method of FIG. 3;

FIG. 7 is a flowchart showing the steps of an example method for determining an attendee attention level based on video frames of the video data included in the attendee data according to the method of FIG. 3;

FIG. 8 is a first user interface screen of a presenter device showing the current attention levels of multiple attendees, as well as an overall current attention level, in accordance with various embodiments of the present disclosure; and

FIG. 9 is a second user interface screen of a presenter device showing the attention levels of multiple attendees over the course of an entire presentation, broken down by interval, as well as a list of top attendees for the presentation based on each attendee's overall attention levels during the presentation, in accordance with various embodiments of the present disclosure.

FIG. 10 is a user interface screen of an attendee device showing the attention levels of a single attendee over the course of an entire presentation, broken down by interval, in accordance with various embodiments of the present disclosure.

Similar reference numerals may have been used in different figures to denote similar components.

## DESCRIPTION OF EXAMPLE EMBODIMENTS

In examples disclosed herein, methods, systems, computing devices, and computer-readable media are described that provide context-aware estimation of student attention during online learning. Context may include a determination of which time periods during a presentation are time periods in which it is highly important for attendees to pay attention, and which time periods during the presentation are time periods in which it is not highly important for attendees to pay attention. Example embodiments may generate an assessment of an attendee's attention level based only, or primarily, on information gathered regarding the attendee's attention level during the periods of high attention importance.

In some embodiments, video data showing attendees' heads may be used to assess attendee attention levels. To increase the quality of the data, the attention monitoring system collects or processes only the video data corresponding to periods when the student is expected to look at a screen. This filtering may also save machine power used to process the data, i.e. processor cycles of a processor device of the attention monitoring system. The time periods when the student is expected to look at the screen are designated periods of high attention importance.

**Example Client-Server Configuration for Attention Monitoring System, Presenter Device(s), and Attendee Device(s)**

The instant disclosure is directed to address at least some of the deficiencies of the current technology. In particular, the instant disclosure describes methods, systems, and processor-readable media for monitoring the attention of attendees of a presentation in a remote learning, video conferencing, or in-person environment. In the described examples, a "presenter" is a person making a presentation to one or more audience members, called "attendees". A device used by the presenter to participate in the presentation is called the "presenter device", and the devices used by the attendees to participate in the presentation are called the "attendee devices". In some embodiments, attention levels of the attendees may be monitored by a further device or system, called the "attention monitoring system". The attention monitoring system communicates with the presenter device and attendee devices via a communication link, e.g., through a network interface to a communication network.

Example configurations of networks, attention monitoring systems, presenter devices, and attendee devices will now be described with reference to example networks and devices. In these examples, the attention monitoring system may be considered a server 250, the presenter device may be first client device 112 associated with a presenter 110 (also called a "teacher" herein), and each attendee device may be considered to be a client device 112 associated with an attendee 120 (also called a "participant" or "student" herein).

In the context of the present specification, a "server" is a physical machine, a virtual machine, or computer program (e.g. software) running on appropriate physical or virtual machine, and is capable of receiving requests from "clients" , and carrying out those requests, or causing those requests to be carried out. The physical machine may be one physical computer or one physical computer system, but neither is required to be the case with respect to the present technology. A virtual machine is a virtual representation of one physical machine or one physical computer system. In the present context, the use of the expression a "server" is not intended to mean that every task (e.g. received instructions or requests) or any particular task will have been received, carried out, or caused to be carried out, by the same server (i.e. the same software and/or machine); it is intended to mean that any number of software modules, routines or functions, or hardware devices may be involved in receiving/sending, carrying out or causing to be carried out any task or request, or the consequences of any task or request; and all of this software and hardware may be one server or multiple servers, both of which are included within the expression "one server".

In the context of the present specification, "client device" is any computer that is capable of running software (e.g. a client application or program) that accesses the server. Thus, some (non-limiting) examples of client devices include personal computers (desktops, laptops, netbooks, etc.), smartphones, and tablets, as well as network equipment such as routers, switches, and gateways. It should be noted that a device acting as a client device in the present context is not precluded from acting as a server to other client devices. The use of the expression "a client device" does not preclude multiple client devices being used in receiving/sending, carrying out or causing to be carried out any task or request, or the consequences of any task or request, or steps of any method described herein.

In the context of the present specification, unless provided expressly otherwise, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first server" and "third server" is not intended to imply any particular order, type, chronology, hierarchy or ranking (for example) of/between the server, nor is their use (by itself) intended to imply that any "second server" must necessarily exist in any given situation. Further, as is discussed herein in other contexts, reference to a "first" element and a "second" element does not preclude the two elements from being the same actual real-world element. Thus, for example, in some instances, a "first" server and a "second" server may be the same software and/or hardware, in other cases they may be different software and/or hardware.

In the context of the present specification, the expression "information" includes information of any nature or kind. Thus information includes, but is not limited to audiovisual works (images, movies, sound records, presentations, etc.), data (location data, numerical data, etc.), text (opinions, comments, questions, messages, etc.), documents, spreadsheets, etc.

In the context of the present specification, the expression "document" is to be broadly interpreted to include any machine-readable and machine-storable work product. A document may include an e-mail, a web site, a file, a combination of files, one or more files with embedded links to other files, a news group posting, a blog, a web advertisement, etc. In the context of the Internet, a common document is a web page. Web pages often include textual information and may include embedded information (such as metadata, images, hyperlinks, etc.) and/or embedded instructions (such as JavaScript, etc.). A page may correspond to a document or a portion of a document. Therefore, the words "page" and "document" may be used interchangeably in some cases. In other cases, a page may refer to a portion of a document, such as a sub-document. It may also be possible for a page to correspond to more than a single document.

In the context of the present specification, unless provided expressly otherwise, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present technology, the processor may be a general purpose processor, such as a central processing unit (CPU) or a processor dedicated to a specific purpose, such as a graphics processing unit (GPU), a tensor processor unit (TPU), a neural processing unit (NPU). Moreover, explicit use of the term "processor" should not be construed to refer exclusively to hardware capable of executing software, and may implicitly include, without limitation, an arithmetic and logic unit, a control unit, and a memory unit for storing instructions, data, and intermediate results, and a hardware accelerator in the form of an application specific-integrated circuit or field programmable gate array configured to perform hardware acceleration. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown.

With these fundamentals in place, the instant disclosure is directed to address at least some of the deficiencies of the current technology. In particular, the instant disclosure describes a system and method for video conferencing and online learning.

The instant disclosure is directed to address at least some of the deficiencies of the current technology. In particular, the instant disclosure describes a system and method for video conferencing and online learning.

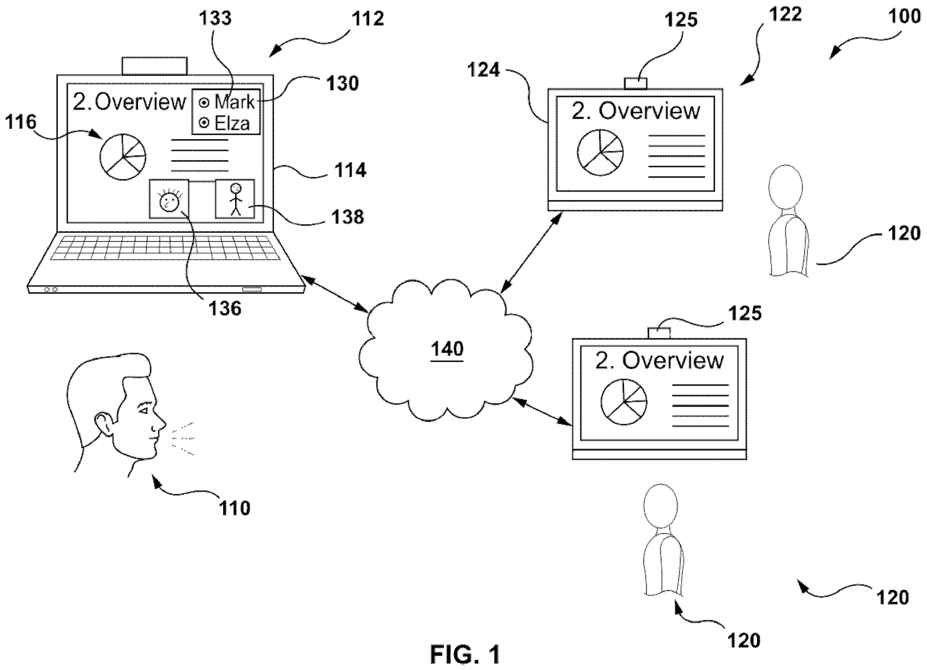

FIG. 1 depicts a video conferencing system 100 for real-time online learning in accordance with an embodiment of the present disclosure. The video conferencing system 100 includes multiple client devices 112 located and different geographic locations that are configured to communicate with each other via a communication network 106 and a video conferencing server 250. The multiple client devices 112 include a first client device 112 associated with (e.g., used by) a host (i.e., presenter 110) of the video conference, a second client device 112 associated with (e.g. used by) a first attendee 120 of the video conference and a third client device 112 associated with (e.g. used by) a second attendee 120 of the video conference. The video conferencing system 100 may also include peripheral equipment (not shown), such as speakers, microphones, cameras, and display devices, located at different geographic locations that can communicate with the video conferencing server 250 via the communication network 106. Although FIG. 1 shows two client devices 112 each associated with one attendee 120, it will be appreciated that in alternative embodiments, the video conferencing system 100 may include any number of client devices 112. Also, in other alternative embodiments, a client device 112 may be associated with multiple attendees 120.

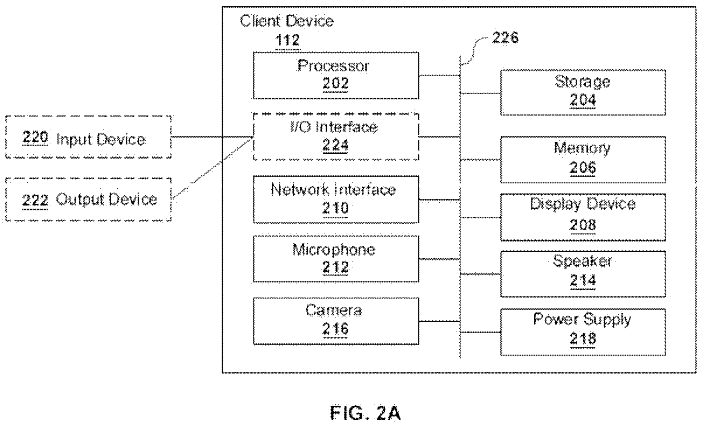

FIG. 2A depicts a block diagram of a client device 112 in accordance with an embodiment of the present disclosure. The client device 112 may be any suitable type of computing device, including desktop computer, laptop computer, tablet, smartphone, portable electronic device, mobile computing device, personal digital assistance, smartwatch, e-reader, internet-enable application, and the like. The client device 112 multiple components, including a processor 202 that controls the overall operation of the client device 112. The processor 202 is coupled to and interacts with other components of the client device 112, including one or more storage units 204, one or more memories 206, a display device 208 (hereinafter referred to as display 208), a network interface 210, a microphone 212, and a speaker 214, and camera 216 (interchangeably used with image sensor 216). The client device 112 also includes a power supply 218 that powers the components of the client device 112, including the memory 206, the display 208, the network interface 210, the microphone 212, the speaker 214, and the camera 216. The power supply 218 may include a battery, a power pack, micro fuel cells and like, however, in other embodiments, the power supply 218 may include a port (not shown) to an external power supply and a power adaptor (not shown), such as an alternating current to direct current (AC-to-DC) adopter that provides power to components of the client device 112. Optionally, the client device 112 includes one or more input devices 220, one or more output devices 222 and an I/O interface 222.

The processor 202 of the client device 112 may include one or more of a central processing unit (CPU), an accelerator, a microprocessor, a graphics processing unit (GPU), a tensor processing unit (TPU), a neural processing unit (NPU), an application-specific integrated circuit (ASIC), a field-programmable gate array (FPGA), a dedicated logic circuitry, a dedicated artificial intelligence processor unit, or combinations thereof.

The processor 202 is configured to communicate with the storage unit 204, which may include a mass storage unit such as a solid state drive, a hard disk drive, a magnetic disk drive and/or an optical disk drive. The processor 202 is also configured to communicate with the memory(ies) 206, which may include volatile memory (e.g. random access memory (RAM)) and non-volatile or non-transitory memory (e.g., a flash memory, magnetic storage, and/or a read-only memory (ROM)). The non-transitory memory(ies) store applications or programs that include software instructions for execution by the processor 202, such as to carry out examples described in the present disclosure. The non-transitory memory store a video conferencing application as described in further detail below. Examples of non-transitory computer readable media include a RAM, a ROM, an erasable programmable ROM (EPROM), an electrically erasable programmable ROM (EEPROM), a flash memory, a CD-ROM, or other portable memory storage.

The processor 202 is also configured to communicate with the display 208, which includes any one of flat panel display (e.g. liquid crystal display, a plasma display, a light emitting diode (LED) display, an organic light emitting diode display (OLED)), touchscreen display such as a capacitive, resistance, surface acoustic wave (SAW) or optical touchscreen display, and the like.

The processor 202 is further configured to interact with the network interface 210. The network interface 210 may include one or more radios configured for wireless communications (e.g. cellular or WiFi communications) with the communication network 106, or one or more network adaptors configured for wired communications with the communication network 106. In general, the network interface 210 is configured to correspond with the network architecture of that is used to implement a link for communications between the client device 112 and the communication network 106. The communication network 106 may be internet, local area network, wide area network or the like.

The processor 202 is further configured to interact with the microphone 212, the speaker 214, and the camera 216. The microphone 210 includes any suitable transducer that converts sound to audio signals and provide the audio signals to the processor 202 for processing and/or transmission to other client devices 112. The speaker 214 includes any suitable transducer receives audio signal from the processor 202 and converts an audio signal received from the processor 202 into sound waves. The camera 216 is configured to captures video (e.g. a sequence of digital images) in a field of view of the camera 216 and provide the captured video to the processor 202 for processing. The camera 216 may be any suitable digital camera, such as a high definition image camera, an infrared camera, a stereo camera and the like. In some embodiments, the microphone 210, the speaker 214, and the camera 216 may be internally integrated to the client device 212. In other embodiments, the microphone 210, the speaker 214, and the camera 216 may be coupled external to the client device 112.

Optionally, the processor 202 may communicate with an input/output (I/O) interfaces 222, which may enable interfacing the one or more input devices 220 (e.g., a keyboard, a mouse, a joystick, trackball, fingerprint detector and the like) and/or output devices 222 (e.g., a printer, peripheral display device, and the like).

The client device 112 also includes a bus 226 providing communication among the components of the client device 112, including the processor 202, the memory 206, the display 208, the network interface 210, the microphone 212, the speaker 212, and the camera 214. The bus 226 may be any suitable bus architecture including, for example, a memory bus, a peripheral bus or a video bus.

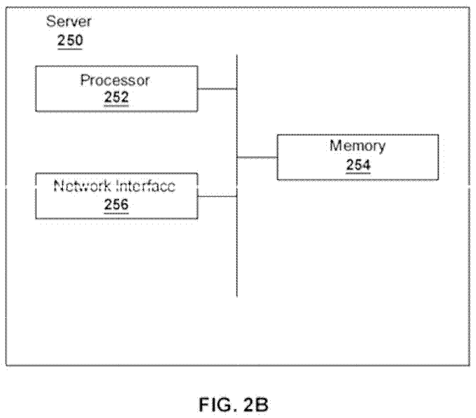

FIG. 2B depicts a block diagram of the video conferencing server 250 in accordance with an embodiment of the present disclosure. In this embodiment, the video conferencing server is a physical machine (e.g. a physical server) or virtual machine (e.g. a virtual server) that executes video conferencing system software to enable the client devices 112 to participate in a video conference. The video conferencing server 250 includes a processor 252, a memory 254, and a network interface 256.

The processor 252 of the video conferencing server 250 may include one or more of a central processing unit (CPU), an accelerator, a microprocessor, a graphics processing unit (GPU), an application-specific integrated circuit (ASIC), a field-programmable gate array (FPGA), a dedicated logic circuitry, a dedicated artificial intelligence processor unit, or combinations thereof.

The memory 254 may include volatile memory (e.g. random access memory (RAM)) and non-volatile or non-transitory memory (e.g., a flash memory, magnetic storage, and/or a read-only memory (ROM)). The non-transitory memory(ies) stores a platform 258 that controls the overall operation of the video conferencing server 250. The platform 258, when executed by the processor 252, implements a video conferencing service. The platform 258 stores in the memory a unique identifier for each user of the video conferencing service and manages the unique identifier or each user of the video conferencing service. The unique identifier for a user may be a username or an email address of the user. A password may also be associated with the unique identifier for a user and stored in the memory 254.

The network interface 256 may include one or more radios configured for wireless communications with the communication network 106, or one or more network adaptors configured for wired communications with the communication network 106. In general, the network interface 256 is configured to correspond with the network architecture of that is used to implement a link for communications between the video conferencing server 250 and the communication network 106.

It is to be noted that the server 250 is shown as a standalone computer. However, the implementation of various other embodiments of the present disclosure may include any client-server model where client devices may run a client version of the video conferencing system software. Other examples of the server 250 may include a distributed computing system that runs the server version of the video conferencing system software, a virtual machine (or virtual machines) instantiated by the infrastructure of a public or private cloud, or a cloud service provider that provides the video conference system software as a service (SaaS). Such implementations or any other similar implementation should not limit the scope of present disclosure.

Returning to FIG. 1, the client device 112 associated with the presenter 110 will be referred to herein, as presenter client device 112 and the client devices 112 associated with the attendees 120 will be referred to herein, as attendee client devices 112. In certain non-limiting embodiments, the presenter client device 112 and each of the attendee client devices 112 may be configured to store and implement instructions associated with the video conference system software. In other words, the video conference system software may be installed on the presenter client device 112 and the attendee client devices 112 to facilitate video conferencing for online learning between the presenter 112 and the attendees 120. It to be noted that versions of video conference system software may vary from device to device. In particular, versions of video conference system software may depend upon the operating system associated with the presenter client device 112 and the attendee client devices 112. For example, if operating system any of the presenter client device 112 and the attendee client devices 112 is AndroidTM , iOSTM, WindowsTM or the like then the video conference system software may be downloaded and installed from their respective application stores.

In other non-limiting embodiments, at least of the presenter client device 112 and the attendee client devices 112 may use a web browser, such as, for example, ChromeTM, SafariTM, MozillaTM, or the like to facilitate video conferencing. It is to be noted that how the presenter client device 112 and the attendee client devices 112 are configured to facilitate video conferencing should not limit the scope of the present disclosure by any means.

In certain non-limiting embodiments, the presenter client device 112 may be configured to send an invitation associated with a future online learning session to the attendee client devices 112. Such video conference invitations may include a time, date, duration or any other information associated with the future video conference. In some embodiments, the presenter client device 112 may send the conference invitations using any suitable means such as, for example, electronic mails (emails), text messages or the like. In certain embodiments, the conference invitations may be password protected hyperlinks, i.e. the attendee client devices 112 might require passwords to join the video conference. In other embodiments, the conference invitations may be open hyperlinks, i.e. any of the attendee client devices 112 having access to the open web links may join the video conference.

In certain non-limiting embodiments, the presenter client device 112 may be located at a first location associated with the presenter 110 (e.g. office, home, or the like). Each of the attendee client devices 112 may be located at different locations, such as, for example, the first attendee client device 112 may be located at a second location associated with the first attendee 120 (e.g. office, home, or the like), the second attendee client device 112 may be located at a third location associated with the second attendee 120 (e.g. office, home, or the like) and so on.

In certain non-limiting embodiments, the presenter client device 112 may be located at a first location associated with the presenter 110 (e.g. office, home, or the like). However, one or more of the attendee client devices 112 may be located at a location common to more than one attendee 120. For example, at least one attendee client device 112 may be associated with at least two attendees 120. In other examples, one or more of attendee client devices 112 may be located at a same location such as a conference hall, a meeting hall or the like and that location may have at least two attendees 120.

In accordance with non-limiting embodiments of the present disclosure, the presenter client device 112 may be configured to initiate a video conference between the presenter 110 and the attendees 120 via the communication network 106. Once the video conference is initiated, the presenter client device 112 may be configured to communicate with the attendee client devices 112.

In certain embodiments, the presenter client device 112 may share various sorts of presenter information 132 with the attendee client devices 112. In certain embodiments, information sharing between the presenter client device 112 and the attendee client devices 112 may be routed via the video conferencing server 250. Such presenter information 132 may include but not limited to a live video of the presenter 110 captured by the camera 216 associated with the presenter client device 112 (hereinafter referred to as presenter camera 216), audio/sound at the presenter 110 side captured by the microphone 212 associated with the presenter client device 112 (hereinafter referred to as presenter microphone 212), content (e.g. a slide of an MS PowerPointTM presentation, a page of MS WordTM document, videos, images, pictures or the like) displayed in graphic user interface (GUI) 130 associated with the video conferencing system software on the display device 208 associated with the presenter client device 112 (hereinafter referred to as presenter display 208).

In certain embodiments, the attendee client devices 112 may receive the presenter information 132 provided by the attendee client devices 112. If the presenter information 132 includes the live video of the presenter 110 and/or content (e.g. a slide of a MS PowerPointTM presentation, a page of a MS WordTM document, videos, images, pictures or the like) displayed on the presenter display 208, such presenter information 132 may be displayed on the display device 208 associated with the attendee client device 112 (hereinafter referred to as attendee display 208). If the presenter information 132 includes audio/sound at the presenter 110 side, the audio/sound may be produced by the speaker 214 associated with the attendee client device 112 (hereinafter referred to as attendee speaker 214).

It is to be noted that the GUI 130 associated with the video conferencing system software may provide the presenter 110 and the attendees 120 with various options. In some non-exhaustive examples the GUI 130 associated with the presenter client device 112 (hereinafter referred to as presenter GUI 130) may provide an option of selecting a particular content from the presenter client device 112 to be displayed on the presenter display 208. In another example, the presenter GUI 130 may provide an option of turning on or turning off various peripherals such as presenter microphone 212, presenter camera 216 or the like. In another example, the presenter GUI 130 may provide an option to add more attendees 120 during an ongoing video conference. In another example, the presenter GUI 130 may provide an option to record the ongoing video conference save the recordings either locally on the presenter client device 112 or video conferencing server 250 or on some public or private cloud. In another example, the presenter GUI 130 may provide an option to schedule a video conference and send invitations to the attendees 112. In another example, the presenter GUI 130 may provide an option to end or leave the video conference.

In another example, the presenter GUI 130 may provide an option to set various permissions for the attendee client device 112 during the video conference. Such permissions may include if the GUI 130 associated with the attendee client device 112 (hereinafter referred to as attendee GUI 130) may share some content or not, add more attendees 120 or not, record the video conference or not. It is to be noted that the attendee GUI 130 may have similar options as that of the presenter GUI 130.

In another example, the presenter GUI 130 may provide a small window (e.g. a window that is small relative to the size of the presenter's display 208) to include a list of the attendees 120 who have already joined the video conference, display video of at least one attendee 120. It is to be noted that in certain embodiments, the small window may be hidden by default and may be displayed or popped up on the presenter display 208 based on certain actions performed the attendee 110, such as, for example, selecting the small window by any suitable means.

During the video conference (i.e. when a communication between the presenter client device 112 and the attendee client devices 112 has already been established using the communication network 106 via the video conferencing server 250), the content (e.g. a slide of a MS PowerPointTM presentation, a page of a MS WordTM document, videos, pictures or the like) to be shared may be displayed on the presenter display 208. In case the presenter 110 has enabled the presenter camera 216, the presenter camera 216 may capture a video (i.e. a series of images) of the presenter 110 (i.e. a live video), the presenter microphone 212 may capture the voice of the presenter 110 and any sound in the surroundings of the presenter 110 (hereinafter the voice of the presenter 110 together with any sound in the surroundings of the presenter 110 referred to as presenter audio/sound information).

In certain embodiments, the presenter client device 112 may be configured to send presenter information 132 to the video conferencing server 250. The presenter information 132 may include one or more of the content displayed on the presenter display 208, the captured series of images) of the presenter 110, and the presenter audio/sound information together. The video conferencing server 250 may be configured to send the presenter information 132 to the attendee client devices 112. Any visual content (e.g. content displayed on the presenter display 112, the video (i.e. series of images) of the presenter 110) included in the presenter information 132 may be displayed on the attendee displays 120 and any audible content in the presenter information 132 may be generated by the attendee speakers 214.

In order to analyze attributes (e.g. body movement, facial expression, or the like) of the attendees 120, the attendee cameras 216 may capture a series of images (i.e. live video) of the attendees 120 and the attendee microphones 212 may capture the voice of the attendees 120 and any sound in the surroundings of the attendees 120 (hereinafter the voice of the attendee 120 together with any sound in the surroundings of the attendee 120 referred to as attendee audio/sound information). In certain embodiments, the attendee client devices 112 may be configured to send attendee information 134 to the video conferencing server 250. The attendee information 134 may include the captured series of images of the attendees 120 (hereinafter also referred to as attendee video information 134). The attendee information 134 may also include the content displayed on the attendee displays 208, and the attendee audio/sound information.

It is to be contemplated that in certain embodiments, the attendee information 134 may be associated with each individual attendee 120 when all the attendees 120 are located at different locations. In such embodiments, each attendee client device 112 may be configured to send the corresponding attendee information 134 to the video conferencing server 250. In certain embodiments in which more than one attendee 120 may be located at the same location (e.g. a conference hall or a meeting hall or the like), in such cases the associated attendee client device 112 may have one or more attendee displays 208, one or more attendee microphones 212, one or more attendee speakers 214, and one or more cameras 216. In such embodiments, the associated attendee client device 112 may compile the attendee information 134 from one or more attendee microphones 212 and one or more cameras 216 and send the corresponding attendee information 134 to the video conferencing server 250.

As previously discussed that the attendee information 134 may include attendee audio/sound information and attendee video information. Some of the attendee audio/sound information may be useful while some of the attendee audio/sound information may be just noise. The useful audio/sound information may include questions, comments, suggestions, request to initiate discussion, clapping sound or the like associated with one or more attendees 120. The useful attendee audio/sound information may be directly related to the ongoing video conference. However, the attendee audio/sound information that is noise may include coughing, sneezing, baby crying, dog barking, traffic sound, playing music/TV in the background, table knock, phone ringing, talking to someone else or any such sound associated with one or more attendees 120 or generated in the surrounding environment of one or more attendees 120 which are not directly related to the ongoing video conference may be treated as noise.

Similarly, some of the attendee video information may be useful while some of the attendee video information may be just noise. The useful attendee video information may include body movement for example, gesture to get attention (raising hands, pointing or the like), gesture to express agreement or disagreement (e.g. by nodding heads), facial expressions indicative of the attention of the attendees, such as, eye gaze, posture, unintentional body movement, or the like. All such useful attendee video information may be in the series of images received by the video conferencing server 250 which are processed by the video conferencing server 250 to determine various attributes of the attendees 120. The video conferencing server 250 may use the attributes to determine an indication about the attendees 120. An indication may include but are not limited to if one or more attendees 120 want to ask questions, if one or more attendees 120 are attentive and understanding the presenter information 132, if one or more attendees are getting sentimental or emotional about the presenter information 132, if one or more attendees 120 are laughing and enjoying the presenter information 132, if one or more attendees 120 are not attentive or lost interest in the presenter information 132 or the like.

However, the attendee video information acting as noise may include for example if one or more attendees 120 are eating and/or drinking, someone is moving around or someone crossed behind one or more attendees 120, one or more attendees are traveling and moving background is captured by one or more attendees cameras 216. Such attendee video information may not provide any useful information that may be directly or indirectly related to the ongoing video conference.

In order to determine various attributes (e.g. body movement including raising hands, waving hands, pointing hands applauding, facial expression, or the like) associated with the attendees 120 in the attendee information 134, in certain embodiments, the video conferencing server 250 may process the attendee video information 134 (i.e. perform face detection and body detection on a series of images included in the attendee information 134) using any suitable computer-vision technique as described below. In certain embodiments, the video conferencing server 250 may be configured to process attendee audio/sound information included in the attendee information 134.

As such, in certain embodiments, the memory 254 associated with the video conferencing server 250 may store instructions of video conference software to be executed by the processor 252 to perform the methods of the present disclosure. In some embodiments, the instructions may include a speech recognition module, a textual analysis module, and a video processing module. In some embodiments, the instructions of the video processing module may include a trained neural network (i.e. a neural network that include parameters learned during training parameters) that receives a series of images and perform face detection, body detection, face tracking, and body tracking on the series of images.

In certain non-limiting embodiments, the video conferencing server 250 may be configured to perform face detection on the attendee video information 134 to detect one or more faces in the attendee video information 134, where each detected face corresponds to one attendee 120 in the attendee video information 134. Based on each face detected in the attendee video information 134, the video conferencing server 250 may generate a bounding box for each respective detected face. Further, the video conferencing server 250 may be configured to perform face recognition on each respective detected face in the attendee video information 134. Performing face recognition for each respective detected face includes monitoring changes in the bounding box generated for a respective face in the attendee video information 134 to determine facial attributes for the respective detected face and analyzing the facial attributes for the respective detected face to infer (i.e. predict) a facial expression, emotion, or attention for the respective detected face. Examples of facial attributes include head pose, face landmark (e.g., forehead, lips, eyes), and eye gaze. Examples of facial expressions inferred (i.e. predicted) for a detected face (i.e. a attendee 120 of the video conference) include laughing, smiling, nodding, examples of attention inferred (i.e. predicted) for a detected face include looking at the attendee display, and examples of emotion inferred (i.e. predicted) for a detected face are having a serious expression.

In certain non-limiting embodiments, the video conferencing server 250 may also be configured to perform face landmark recognition to recognize face landmarks of a detected face, such as such as a forehand, eyes, and lips. Face landmark recognition includes detecting a face landmark (e.g., forehead, lip, eyes, etc.) in a detected face, generating a sub-bounding box for the detected face landmark, monitoring changes in the sub-bounding box generated for the face landmark to determine attributes of the face landmark, and analyzing the attributes of the face landmark to infer (i.e., predict) a facial landmark. Face landmark recognition generates information indicative of a type of facial landmark recognized.

In certain non-limiting embodiments, prior to performing face recognition, the video conferencing server 250 crops the attendee video information 134 to generate new attendee video information 134 that includes only a portion of the attendee video information that corresponds to the bounding box generated for a detected face. In other words, each image in the series of images that forms the attendee video information 134 is cropped to include a portion of the image that corresponds to the bounding box generated for a detected face. In this embodiment, the video conferencing server 250 is configured to perform face recognition on the new attendee video information 134. Performing face recognition on the new attendee video information 134 includes monitoring changes in new attendee information to determine facial attributes for the detected face and analyzing the facial attributes for the detected face to infer (i.e. predict) a facial expression, emotion, or attention for the detected face.

In some of the non-exhaustive example embodiments, the video conferencing server 250 may be configured to compute a number of the attendees 120 looking at the screen by analyzing the recognized facial attributes of each face (i.e. each attendee 120) detected in the video attendee information 134. In another example embodiment, the video conferencing server 250 may analyze the facial expressions inferred for each detected face (i.e. each attendees 120) to determine an overall attention level for the attendees 120. In particular, by, the video conferencing server 250 may determine the number of the attendees 120 having a particular facial expression (e.g. laughing, smiling, having serious expressions, feeling bored or the like).

In certain non-limiting embodiments, the video conferencing server 250 may be configured to perform body detection on the attendee video information 134 to detect one or more bodies in the attendee video information 134, where each detected body corresponds to one attendee 120 in the attendee video information 134. Based on each body detected in the attendee video information 134, the video conferencing server 250 may generate a bounding box for the each detected body. The video conferencing server 250 may be configured to perform body movement recognition (otherwise known as gesture recognition) on the attendee video information 134 to infer (i.e. predict) a body movement (otherwise known as a gesture) for each detected body. Body movement recognition for each respective detected body includes monitoring changes in the bounding box generated for a respective detected body (or body part) in the attendee video information 134 to determine body movement attributes for the respective detected body and analyzing the body movement attributes for the respective detected body (or body part) to infer (i.e. predict) a body movement (otherwise known as a gesture) of the detected body. Body movement attributes include speed of movement of the body (or speed of movement of a part of the body ("body part"), such as a hand, arm, leg, etc.), duration of the movement of the body (or duration of movement of a part of the body), intensity of the movement of the body (or intensity of the movement of the body part), and a relative range of the movement of the body (or elative range of the movement of the body part). Body movements (e.g. gestures) inferred (i.e. predicted) by the video conferencing server 250 may include head nodding, head tilting, raising hands, waving hands, pointing hands applauding, and the like.

In certain non-limiting embodiments, prior to performing body movement recognition, the video conferencing server 250 crops the attendee video information 134 to generate new attendee video information 134 that includes only a portion of the attendee video information 134 that corresponds to the bounding box generated for a detected body. In other words, each image in the series of images that forms the attendee video information 134 is cropped to include a portion of the image that corresponds to the bounding box generated for a detected body. In this embodiment, the video conferencing server 250 is configured to perform body movement recognition on the new attendee video information 134. Performing body movement recognition on the new attendee video information 134 includes monitoring changes in new attendee video information 134 to determine body movement attributes for the detected body and analyzing the body movement attributes for the detected body to infer (i.e. predict) a body movement (gesture) for the detected body.

In some of the non-exhaustive examples, the video conferencing server 250 may compute a number of the attendees 120 raising their hands to ask questions, waving, their hands to get the attention of the presenter 110, applauding and the like based on the recognized body movement (e.g. gesture). In certain embodiments, to correctly infer (e.g. predict) a body movement (e.g. gesture), the video conferencing server 250 may analyze the body movement attributes of speed, duration, and intensity of the movement. For example, if one of the attendees 120 move his/her hand for some other action, such as for picking up a pen, and quickly return his hand to the original position or any other position than being raised, the video conferencing server 250 may not recognize this movement as being a hand raised by the attendee 120. In another example, the video conferencing server 250 may analyze speed of movement of the body (or a body part), such as speed with which the attendee 120 is waving his/her hands.

In certain non-limiting embodiments, each respective attendee client device 112 may perform face detection, face landmark detection, and face recognition to recognize facial attributes of each detected face in the attendee information 134. In these embodiments, each attendee client device 112 transmits facial expressions, recognized for each detected face to the video conferencing server 250 which analyzes the facial attributes for each respective detected face and infers (i.e. predicts) a facial expression, emotion, or attention of the each respective detected face. By performing face detection, face landmark detection, and face recognition at each attendee client device 112, the amount of data transmitted between each client attendee client device 112 and the video conferencing server 250 is significantly reduce because the attendee video information 134 is not transmitted to the video conferencing server 250.

In certain non-limiting embodiments, each respective attendee client device 112 may perform body detection and body movement recognition (e.g. gesture recognition) to recognize body movement attributes of each detected body in the attendee information 134. In these embodiments, each attendee client device 112 transmits body movement inferred (i.e. predicted) recognized for each detected body to the video conferencing server 250 which performs body movement recognition (e.g. gesture recognition) using the body movement attributes for each respective detected body to identify a body movement (e.g. gesture) of each respective detected body. By performing body detection and body movement recognition at each attendee client device 112, the amount of data transmitted between each attendee client device 112 and the video conferencing server 250 is significantly reduce because the attendee video information 134 is not transmitted to the video conferencing server 250.

In certain non-limiting embodiments, the video conferencing server 250 may be configured to filter out the attendee video information 134 acting as noise in the attendee video information 134. By way of example, if one or more attendees 120 are eating and/or drinking, someone is moving around or someone crossed behind one or more attendees 120, one or more attendees are traveling and moving background is captured by one or more attendees cameras 216, such portion of the attendee video information may not provide any useful information that may be directly or indirectly related to the ongoing video conference. The video conferencing server 250 may be configured to remove such portion of the attendee video information 134.

In certain non-limiting embodiments, the video conferencing server 250 may be configured to process attendee audio/sound information present in the attendee information 134. In some of the non-exhaustive examples, the video conferencing server 250 may analyze the attendee audio/sound information to determine if the attendees 120 are applauding or one or more of the attendees 120 are asking questions. In certain non-limiting embodiments, the video conferencing server 250 may be configured to filter out some of attendee audio/sound information that is acting as noise in the attendee information 134. For example, the video conferencing server 250 may filter out a part of the of attendee audio/sound information including coughing, sneezing, baby crying, dog barking, traffic sound, playing music/TV in the background, table knock, phone ringing, talking to someone else or any such sound associated with one or more attendees 120 or generated in the surrounding environment of one or more attendees 120 which may not be directly related to the ongoing video conference.

It is to be noted that in certain embodiments, the video conferencing server 250 may use any suitable audio processing techniques to process the audio/sound included in attendee information 134. How the attendee information 134 is processed should not limit the scope of the present disclosure. Further, in above examples, the attendee information 134 is being processed by the video conferencing server 250. However, in certain embodiments, the attendee information 134 may be processed locally at the attendee client devices 112 and the resultant information may be forwarded to the video conferencing server 250 for further processing.

Once, the attendee information 134 is processed, the video conferencing server 250 may be configured to aggregate the processed attendee information 134. By way of non-exhaustive examples, during the ongoing video conference, in response to the presenter 110 presenting the presenter information 132, the attendees 120 may applaud. In another example, in response to the presenter 110 presenting the presenter information 132, one or more of the attendees 120 may raise their hands or wave their hands to ask questions. In process of aggregating the processed attendee information 134, the video conferencing server 250 may keep a record of a type facial expressions or body movements of the attendees 120. Such record may include but not limited to a number of attendees 120 applauded, a number of attendees 120 raised their hands along with which particular attendees 120 have raised their hands and the like.

As previously discussed, during the ongoing video conference it may be difficult for the presenter 110 to keep track of the response of the attendees 120. This problem becomes more severe with increasing number of attendees 120. To this end, in certain embodiments, the memory 254 may store a plurality of ambient graphics corresponding to the type of facial expressions or body movements of the attendees 120 recorded. In certain embodiments, the processor 252 may be configured to generate the plurality of ambient graphics and store in the notifications in the memory 254.

The term "ambient graphic", as used herein, may refer to any visual content (such as, for example, image, a series of images, video, animation, or a combination thereof) that, when displayed on a display (e.g. the presenter display 208 and the attendee display 208), may not fully obscure any part of the original content that is being displayed on the display. In certain embodiments, the ambient graphics may be semitransparent. The term "semitransparent" as used herein refers to partially or somewhat transparent or may be translucent. In other words, if the ambient graphic is overlaid over some digital content such as, for example, content being displayed in the presenter GUI 130 on the presenter display 208, both the ambient graphic and displayed content may be simultaneously visible to the presenter 110.

It will be appreciated that some embodiments may use configurations for the attention monitoring system, presenter device, and attendee devices different from those described above with reference to FIG.s 1-2B. In some examples the presenter 110 may be physically present with one or more of the attendees 120, and the presenter device and one or more attendee devices may constitute a single device, e.g., a single device equipped with one or more cameras to capture video of the one or more attendees present with the presenter 110 and a microphone to capture audio of the presenter's voice. In some embodiments, the attention monitoring system may be combined with the presenter device or one of the attendee devices in a single device. In some embodiments, two or more attendee devices may be combined into a single device equipped with a single camera for capturing video showing two or more attendees, and the video captured by the camera may be used to monitor two or more attendees shown in the frames of the video. In some embodiments, the presenter and attendees are all physically present together, and a single device equipped with one or more cameras and a microphone is used to perform the functions of the attention monitoring system, presenter device, and attendee devices. It will be appreciated that the methods described herein may be applicable to other configurations as well.

**Example Methods for Estimating Attendee Attention**

Example methods will now be described for estimating the attention level of attendees of a presentation using an attention monitoring system. These example methods will be described with reference to the example client-server configuration described above with reference to FIG.s 1-2B, but it will be appreciated that these methods may be performed by other configurations of an attention monitoring system as well.

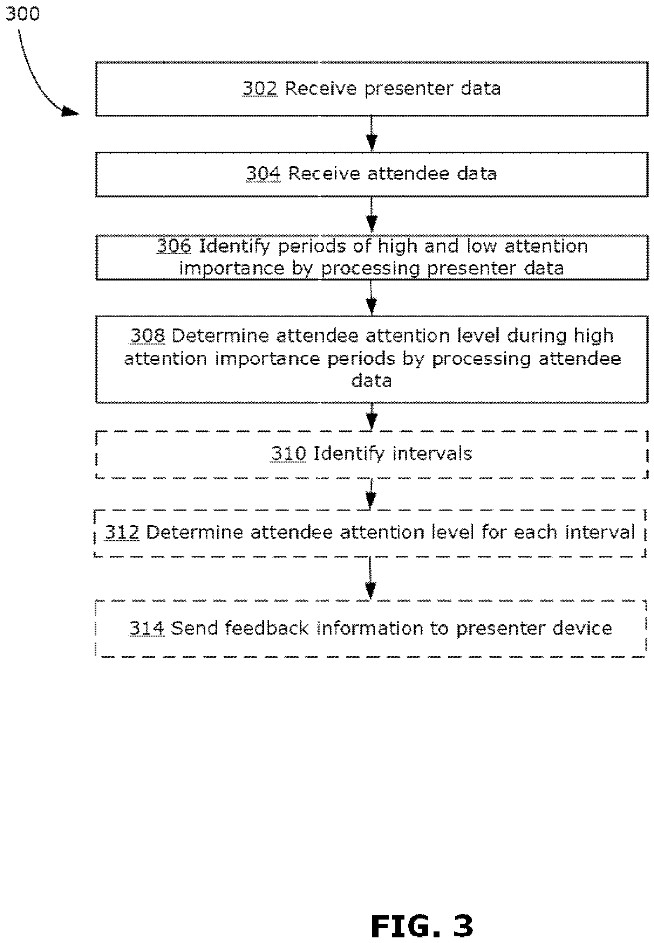

FIG. 3 shows a flowchart of the steps of a method 300 performed by an attention monitoring system (e.g., server 250), for estimating attendee attention. Optional steps are shown in dashed outline.

At 302, the attention monitoring system receives, from a presenter device (e.g., first client device 112 associated with presenter 110), presenter data corresponding to a presentation period. The presentation period indicates at least a portion of the time period in which the presenter 110 will interact with the attendees 120 in a communication or education session. The presenter data is data provided by the presenter device that relates to a presentation (such as a course lecture, a seminar, a workshop, or a speech) being made by the presenter during the presentation period and may include various types of data, including audio data, textual presentation data, visual presentation data, and presenter interaction data. Audio data may be audio recording data, such as a waveform or stream of audio data captured by a microphone of the presenter device, and may include the sound of the presenter 110 speaking during the presentation period. Textual presentation data may include written material relating the presenter's presentation, such as the written content of presentation slides, the presenter's notes relating to the presentation, and textual course material relating to a larger educational course or topic to which the presentation relates. Visual presentation data may include any visual content intended for display to the attendees, such as presentation slides, video images of the presenter captured by a camera of the presenter device during the presentation period, recorded video, a visual representation of the presenter's computer desktop, transparency projector images, and so on. The visual presentation data may have characteristics that change over time, for example, as a presentation advances from one slide to the next, as a video plays sequential frames, as items such as icons and cursors are moved or highlighted on the presenter's computer desktop, or as the presenter moves his or her body or moves other objects in the field of view of the camera of the presenter device. Visual presentation data may in some examples indicate the content of a visual presentation, such as a slide deck, sequence of images, or recorded video of the presenter writing or drawing on a blackboard, whiteboard, or transparency. Presenter interaction data indicates an interaction of the speaker with the visual presentation, and may be derived from one or more other types of presenter data. For example, presenter interaction data may include indications that the presenter is moving a pointer or laser pointer (in captured video), is moving a cursor or mouse pointer (on a computer desktop, e.g., the presenter device), is touching a touch-sensitive user input device of the presenter device with a finger or stylus, is moving a pen or piece of chalk on a writing surface (in captured video), or is inputting text through a text input device of the presenter device. In some examples, the presenter data may include a pre-recorded presentation (including audio and/or video content) having a duration spanning the presentation period and having one or more annotations indicating time periods of the presentation period during which it is important for attendees to pay attention. In some examples, these annotations may indicate an attention importance level for one or more periods of the presentation period, such as high/medium/low attention importance levels, or a continuous scalar value indicating an attention importance level. The attention importance level indicates a degree to which it is important for an attendee 120 to pay attention to the content being presented by the presenter 110, as described in greater detail below with reference to step 306.

In some examples, the presenter 110 presents a lecture showing education material (ex. textbook) to attendees. The presenter's device includes a camera and microphone for capturing video of the presenter's face and/or instructional objects (e.g. a textbook and whiteboard) and audio input of the presenter's voice. The presenter data includes this video data (as visual presentation data) and audio data, as well as presentation interaction data indicating interaction with the education material (e.g. pointer movement, drawing, and text input by various input devices of the presenter device such as mouse, stylus, finger touch and keyboard).

At 304, the attention monitoring system receives, from an attendee device (e.g., other client devices 112 associated with attendees 120), attendee data corresponding to at least a portion of the presentation period. The attendee data may include video data comprising a plurality of frames of a video of the attendee 120 captured by a camera of the attendee device. The video data may be used to determine the degree of an attendee's attention to the presenter's presentation, as described below with reference to step 308. Attendee data may include other forms of data as well, such as attendee interaction data (e.g., data indicating user input to the attendee device such as text or pointer input) or audio data captured by a microphone of the attendee device configured to capture the attendee's voice. In some embodiments, these other forms of attendee data may also be used in determining the degree of a user's engagement with or attention to the presenter's presentation.

In some embodiments, the attention monitoring system, the presenter device, or another device in communication with the attendee device via the network is configured to send at least some of the presenter data to the attendee device. The attendee device is configured to display the visual presentation data of the presenter data on a display, and to play the audio data of the presenter data on a speaker. The attendee device includes a camera for capturing images of the student's head as a sequence of video frames. These video frames are sent to the attention monitoring system via the network as attendee data.

In some embodiments, the attendee data may be processed to determine attendee attention levels (according to step 308 below) locally on the attendee device before sending the resulting attention level data to the attention monitoring system, instead of sending the video data to the attention monitoring system and performing step 308 on the attention monitoring system, as described below. In such embodiments, the attendee data may include attention level data as determined at step 308 below. In some embodiments, attention level data may be generated by the attendee device at all times, but may only be requested by the attention monitoring system during periods of high attention importance (as determined below at step 306), in response to which request the attendee device would send the attention level data as part of the attendee data. In other embodiments, attention level data may be generated only during periods of high attention importance. In such embodiments, the attention monitoring system would be configured to send to the attendee device attention importance level data generated at step 306 below, thereby enabling the attendee device to generate and send attention level data only during periods of high attention importance.

At 306, the attention monitoring system processes the presenter data to identify one or more periods of the presentation period as high attention importance and one or more periods of the presentation period as low attention importance. As described above, an attention importance level indicates a degree to which it is important for an attendee 120 to pay attention to the content being presented by the presenter 110 at a given point in time. A lecture or other presentation may contain any number of moments in which attendee engagement with the presentation materials is not essential, expected, or required: e.g., moments in which the presenter 110 is not present, is taking a break, is reviewing his or her notes, is listening to a question asked by an attendee, and so on. There may also be moments in which the presenter 110 is speaking about topics unrelated to the presentation material, such as personal or administrative matters. In any such moments, an attention monitoring system intended to gauge attendee engagement with the presentation material may be more effective if it discounts or disregards attendee attention levels, and only assesses attention levels during the moments when attention is important.

In some embodiments, attention importance for a given period may be represented as a continuous scalar value. In such embodiments, periods of high attention importance may be categorized as such on the basis of the scalar attention importance level for the period being above an attention importance threshold value, and periods of low attention importance may be categorized as such on the basis of the scalar attention importance level for the period being at or below the attention importance threshold value. In some embodiments, attention importance may be represented as a binary value (e.g., important/not important, or high/low), or a range of discrete values such as high/medium/low/very low attention importance levels.

Thus, in some embodiments, after determining an attention importance level for a plurality of periods of the presentation period, the attention monitoring system may identify one or more of the plurality of periods of the presentation period as high attention importance when the attention importance level is above an attention importance threshold value, and identify one or more of the periods of the presentation period as low attention importance when the attention importance level is below the attention importance threshold value.

In some embodiments, the attention importance level indicates a minimum attendee attention level required for that time period. Thus, for each period of high attention importance, the attention monitoring system may process the presenter data to identify a minimum attendee attention level required for the period. This minimum attendee attention level may be used during step 308 below to determine whether an attendee is paying sufficient attention to the presentation.

FIG.s 4-6 show example methods for determining an attention importance level for a time period during the presentation period. The three methods 400, 500, 600 described with reference to FIG.s 4-6 are examples of how step 304 of method 300 may be implemented in different embodiments. It will be appreciated that other methods, including subcombinations of the features or steps of these example methods, could be used to perform step 304 in other embodiments.

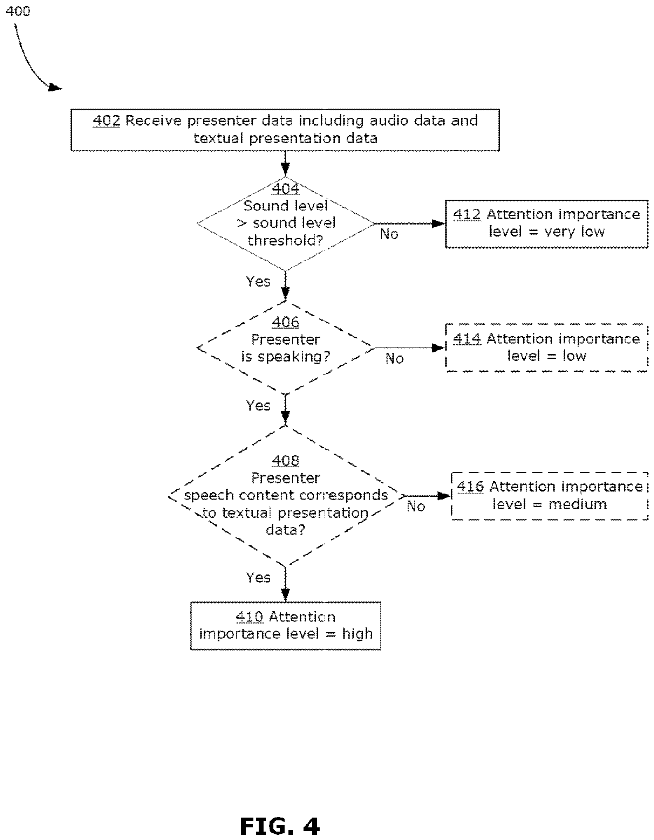

FIG. 4 shows a flowchart of the steps of a first example method 400 performed by an attention monitoring system for identifying periods of high and low attention importance during the presentation period using audio data included in the presenter data. The method 400 processes the audio data to determine periods during which the presenter is speaking, and uses this determination as the basis for identifying one or more periods of high attention importance. Other features of the audio data may be used in various examples to assist in the determination of attention importance level, such as distinguishing between speech sounds and non-speech sounds of the audio data, distinguishing between presenter speech sounds and non-presenter speech sounds of the audio data, identifying an audio volume level of the audio data, and/or identifying the content of the presenter's speech and processing the textual presentation data to determine that the content of the presenter's speech corresponds to the textual presentation data.

At 402, the attention monitoring system receives presenter data, including audio data and textual presentation data, from the presenter device 112. In some examples, the presenter data may include video and/or audio data consisting of a sequence of frames, and the presenter data may be processed one frame at a time. The frame corresponds to a single point in time or a single short period of time within the presentation period.

At 404, the attention monitoring system determines whether, for a point in time or period of time within the presentation period, a sound volume level of the audio data is above a sound level threshold. If the sound volume level is below the sound level threshold, the method 400 proceeds to step 412, assigning a "very low" attention importance level to the point in time or period of time (e.g., a continuous attention importance level of 0). This determination may filter out low-level noise and avoid triggering steps 406 and 408, thereby potentially saving computational and/or network resources. If the sound volume level is above the sound level threshold, the method 400 proceeds to step 406.

At 406, the attention monitoring system determines whether, for the point in time or period of time within the presentation period, the audio data indicates that the presenter is speaking. This determination may be carried out by a speech recognition module of the attention monitoring system according to known techniques. In some embodiments, the speech recognition module may simply distinguish between human speech sounds and non-speech sounds of the audio data. In some embodiments, the speech recognition module may distinguish between speech sounds in the presenter's voice and speech sounds in another voice. This latter distinction may be useful in contexts involving the physical presence of one or more attendees with the presenter, wherein the microphone of the presenter device may capture speech sounds of the other attendees physically present.

If the speech recognition module determines that no human speech (or no presenter speech) is present in the audio data at that point in time, the method 400 proceeds to step 414, assigning a "low" attention importance level to the point in time or period of time (e.g., a continuous attention importance level of 20). This determination may filter out non-speech noise and avoid triggering step 408, thereby potentially saving resources. If the speech recognition module determines that the presenter is speaking (or that a human is speaking) in the audio data, the method 400 proceeds to step 408.

At 408, the attention monitoring system determines whether, for the point in time or period of time within the presentation period, the audio data indicates that the content of the presenter's speech corresponds to the textual presentation data. This determination may be carried out by the speech recognition module and a textual analysis module of the attention monitoring system. The speech recognition module may identify the content of the presenter's speech in the audio data using known speech recognition techniques to transcribe the presenter's speech. The textual analysis module may compare the transcribed text of the presenter's speech to the various types of textual presentation data to determine whether the textual content of the presenter's speech corresponds to the textual presentation data. For example, the textual analysis module may perform keyword matching, semantic analysis, or other known textual comparison techniques to determine whether the presenter is speaking about a topic closely related to the presentation content or about another topic (such as administrative or personal matters).

If the speech recognition module determines that the content of the presenter's speech does not correspond to the textual presentation data, the method 400 proceeds to step 416, assigning a "medium" attention importance level to the point in time or period of time (e.g., a continuous attention importance level of 50). This determination may filter out irrelevant speech. If the speech recognition module determines that the content of the presenter's speech does correspond to the textual presentation data, the method 400 proceeds to step 410, assigning a "high" attention importance level to the point in time or period of time (e.g., a continuous attention importance level of 100).

Steps 402 through 408 may be repeated as many times as necessary to determine an attention importance level for each of a plurality of points in time or periods of time within the presentation period.

In some embodiments, method 400 may omit one or more of steps 404 through 408 and/or add additional steps to factor other audio data features (as described above) or other types of presenter data (as described above with reference to step 302 of method 300) into the determination of an attention importance level. In some embodiments, the attention importance levels assigned by steps 410 through 416 are restricted to a binary high/low value (e.g., high value at step 410, low value at steps 412, 414, and 416).

Once an attention importance level has been determined for a point in time during the presentation period (e.g. a point in time corresponding to a single video frame of presenter data or attendee data), that point in time may be associated with the calculated attention importance level. Periods of high attention importance and periods of low attention importance may be identified based on the attention importance levels associated with the points in time within each period, for example by averaging or otherwise aggregating the attention importance levels of the points within each period.

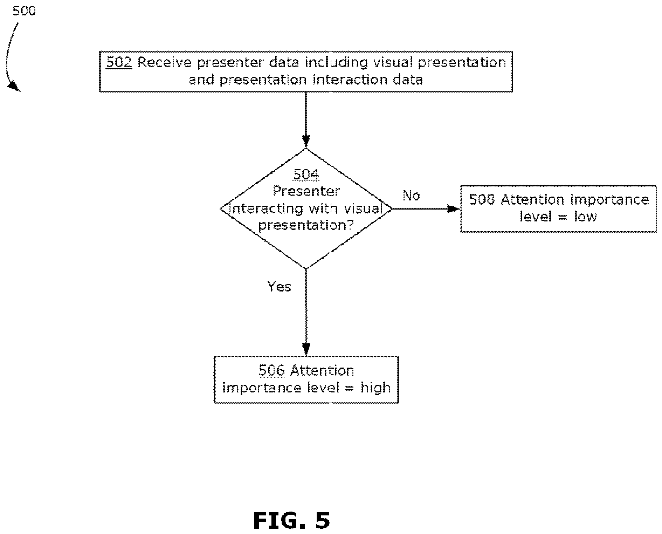

FIG. 5 shows a flowchart of the steps of a second example method 500 performed by an attention monitoring system for identifying periods of high and low attention importance during the presentation period using presentation interaction data included in the presenter data. In this method 500, the presenter's interaction with the presentation material, such as cursor movement by an input device, pen or hand touch to a touch screen, and text input can be used as an indicator for the time periods when attendees' attention is required.

As described above with reference to step 302, in some examples the presentation interaction data may be derived from other types of presenter data. For example, visual presentation data included in the presenter data may be processed to determine that a visual characteristic of the visual presentation data has changed, which may indicate interaction with the presentation by the presenter. The visual characteristics of the visual presentation data that are determined to have changed may include presenter pointer movement, e.g., the movement of a mouse cursor on the presenter device desktop, video of the presenter writing figure on a whiteboard, or video of the presenter pointing to a sentence in the text book. In another example, the visual characteristics of the visual presentation data that are determined to have changed may include the content of a visual presentation, e.g., the advance from one slide to another in a slide deck, indicating interaction of the speaker with the visual presentation.

At 502, the attention monitoring system receives presenter data. As in method 400, the presenter data may include video and/or audio data consisting of a sequence of frames, and each frame may be processed one at a time, each frame corresponding to a point in time or very short period of time within the presentation period. In method 500, the presenter data includes visual presentation (e.g., a video of the presenter writing on a surface, or a slide presentation) and presentation interaction data.

At 504, the attention monitoring system determines whether the presenter is interacting with the visual presentation material at the point in time or period of time. This determination is made based on the presentation interaction data. As described above, the presenter interaction data may include indications that the presenter is moving a pointer or laser pointer (in captured video), is moving a cursor or mouse pointer (on a computer desktop, e.g., the presenter device), is touching a touch-sensitive user input device of the presenter device with a finger or stylus, is moving a pen or piece of chalk on a writing surface (in captured video), or is inputting text through a text input device of the presenter device.

If the presenter is determined at step 504 to be interacting with the visual presentation, or is determined to be interacting with the presentation based on other criteria (e.g., comparison of text input of the presentation interaction data to textual presentation data of the presenter data), the method 500 proceeds to step 506, assigning a "high" attention importance to the point in time of period of time. If the presenter is determined not to be interacting with the presentation, the method 500 proceeds to step 508, assigning a "low" attention importance to the point in time of period of time.

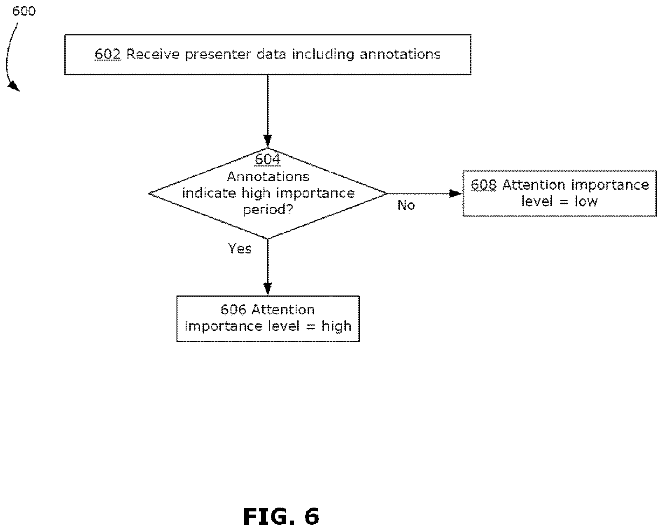

FIG. 6 shows a flowchart of the steps of a third example method 600 performed by an attention monitoring system for identifying periods of high and low attention importance during the presentation period using annotations included in a pre-recorded presentation. In this method 600, the presenter data includes one or more annotations indicating the one or more periods of high attention importance of the presentation period. The attention monitoring system processes the annotations to identify the one or more periods of the presentation period as high attention importance.

At 602, the attention monitoring system receives presenter data. As in methods 400 and 500, the presenter data may include video and/or audio data consisting of a sequence of frames, and each frame may be processed one at a time, each frame corresponding to a point in time or very short period of time within the presentation period. In method 600, the presenter data includes one or more annotations indicating attention importance levels for one or more periods of the presentation period. The presenter data may also include a pre-recorded presentation such that the annotated periods within the presentations period can be determined with reference to timestamps within the pre-recorded presentation. However, in some embodiments, other annotations techniques may be used to annotate live presentations, e.g., a slide deck may contain annotations associated with specific slides or animations such that the period of time in which the slide or animation is being displayed during a live presentation is identified by the attention monitoring system as a period of high attention importance.

Annotations to presenter data may include metadata tags included in a visual presentation (such as a video or slide presentation) identifying time periods between two timestamps as having an identified attention importance level. In some

At 604, if the current point in time or period of time is determined to be during a period of high attention importance based on the annotations, the method proceeds to step 606, assigning a "high" attention importance level to the point in time or period of time. If the current point in time or period of time is determined not to be during a period of high attention importance based on the annotations, the method proceeds to step 608, assigning a "low" attention importance level to the point in time or period of time.

Whereas methods 400, 500, 600 have been described as three examples of how to identify periods of high attention importance and low attention importance in the presentation period, other approaches or variant of these approaches may be used in some embodiments. Attention importance levels may be determined in various embodiments based on various different combinations of different types of presenter data.

Returning to FIG. 3, at step 308, the attention monitoring system processes the attendee data to determine an attendee attention level during the one or more periods of high attention importance.

In some embodiments, determining the attention level of an attendee comprises determining that the attendee is looking at a display of the attendee device, upon which is displayed visual presentation content based on the presenter data. Determining that the attendee is looking at the display may comprise processing the video data of the attendee data to determine an attendee gaze direction in one or more of the plurality of frames of the video data. This step 308 will be described as being performed by the attention monitoring system based on the received attendee data, but as noted above in reference to step 302, in some embodiments the processing of the video data to determine attention levels may be performed in the attendee device.

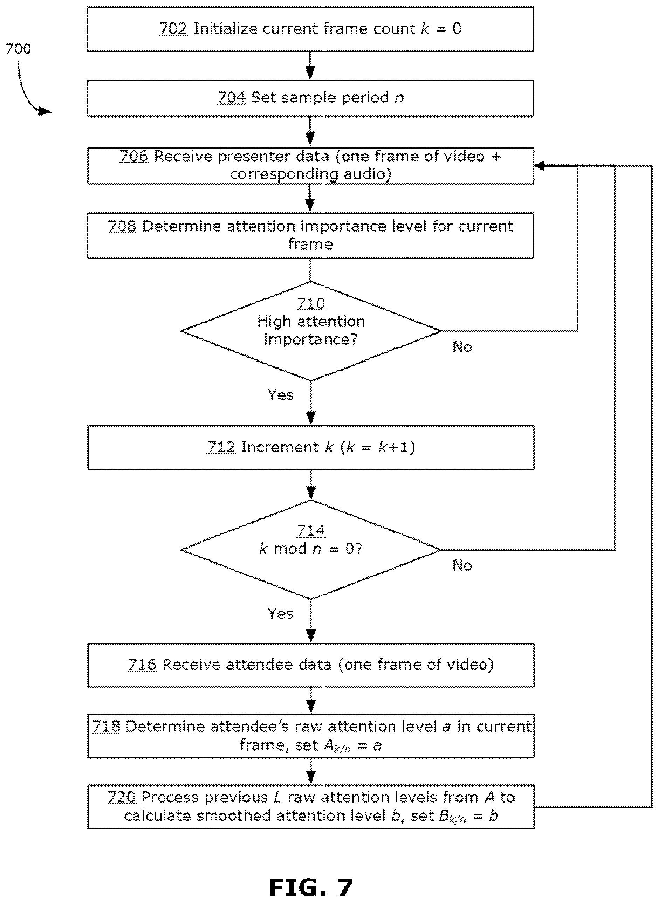

FIG. 7 shows an example method 700 for determining an attendee attention level based on video frames of the video data included in the attendee data. In addition to performing step 308 of method 300, method 700 includes steps 706 and 708 that correspond to previous step 306 of method 300.

At 702, a current frame count value k is initialized to $k = 0$. The current frame count value may be, e.g., stored as a variable in software implementing a video processing module of the attention monitoring system.

At 704, a sample period $n$ is set to value $n = 0$. The sample period may be an operational parameter pre-defined in the attention monitoring system software or configurable by a user to set the sampling rate of the video processing module. In some embodiments, the sample period may be dynamically changed in response to various dynamic factors, e.g., video quality or the number of attendees shown in a frame.

At 706, a frame of the presenter data is received by the attention monitoring system, as described at steps 402, 502, and 602 of methods 400, 500, and 600 respectively. The presenter data received in this method 700 should include some form of data that can be visually presented to attendees, such as visual presentation data, in order for this attention level determination method (i.e. monitoring whether the attendee is looking at the display) to be effective.

At 708, the attention importance level of the point in time or period of time corresponding to the frame of presenter data is determined, as described above with reference to step 306 and methods 400, 500, and 600.

At 710, the attention monitoring determines whether the current period corresponding to the frame of presenter data is a period of high attention importance. In various embodiments using different ranges or sets of values for attention importance, as described above, the periods of high attention importance may be defined in different ways. In some embodiments, attendee attention is determined for all periods having attention importance (as identified at step 306) above a threshold value or category, such as a scalar attention importance value above 60, or an attention importance category of "medium" or higher. In the context of this step 308, a period of "high" attention importance denotes a period in which attention importance, as determined at step 306, is above a predetermined value or threshold.

If the period has high attention importance, the method 700 proceeds to step 712. Otherwise, the method 700 returns to step 706 to receive the next frame of presenter data.

At 712, the current frame count value k is initialized to $k = k + 1$. Thus, before processing the first video frame of the attendee data in a first period of high attention importance, the current frame count value $k$ is at value 1.

At 714, the attention monitoring system determines whether the current frame count value $k$ is a multiple of the sample period $n$, i.e. whether $k$ modulo $n = 0$. This means that, during a period of high attention importance, the attendee video will be sampled at every $n$ frames. Thus, the value of $n$ may be set high for sporadic sampling and low for rapid sampling.

At 716, a video frame of the attendee data is received by the attention monitoring system. The video frame of attendee data corresponds to the same time period as the current frame of presenter data received at step 306. As described above, the attendee device in various embodiment may be configured either to send attendee data at all times, or only during periods of high attention importance, in various embodiments. The camera of the attendee device is positioned such that, if the attendee is using the device properly, the video frame shows the attendee's head.

At 718, the attention monitoring system processes the video frame of attendee data to determine a current raw attention level, a, for the attendee. After determining $a$, the attention monitoring system sets a value $A_{k/n} = a$, indicating a raw attention level for the current $(k/n)^{th}$ sample. Thus, if $k = 120$ at the current frame and $n = 10$, the current sample is the 12th sample, and $A_{12} = a$.

The raw attention level is estimated using face detection, face orientation estimation, and/or eye gaze estimation, the determination of which are described above with reference to FIG. 2B. In some examples, the raw attention level may be categorized as low (e.g. scalar attention value 10), medium (e.g. scalar attention value 50), or high (e.g. scalar attention value 100) based on a detected pitch and yaw of the attendee's head as determined by processing of the video frame. The pitch of the attendee's head may be determined as the angle of rotation of the head about an axis passing approximately through the attendee's ears (left to right), i.e. degree of tilt up and down, and the yaw of the attendee's head may be determined as the angle of rotation of the head about an axis passing approximately through the top of the attendee's head (up to down), i.e. degree of head rotation to the left or right on the neck. The position and orientation of the camera relative to the display of the attendee device may be used to determine a zero value for the pitch and yaw of the attendee's head corresponding to the attendee facing directly toward the display. In some embodiments, a raw attention level corresponding to a given yaw value and a given pitch value may be indicated in Table 1 below.

**Table 1**

| Yaw | Raw Attention Level |
|---|---|
| $0° \leq Yaw < |20°|$ | High |
| $20° \leq Yaw < |40°|$ | Medium |
| $|40°| \leq Yaw$ | Low |
| **Pitch** | **Raw Attention Level** |
| $0° \leq Pitch < |15°|$ | High |
| $15° \leq Pitch < |30°|$ | Medium |

(continued)

| Pitch | Raw Attention Level |
|---|---|
| $|30°| \leq Pitch$ | Low |

The raw attention levels corresponding to pitch and yaw values in Table 1 may be combined in various ways in different embodiments. Some embodiments may use the lower of the two values as the overall raw attention score. Some embodiments may use the higher of the two values as the overall raw attention score. Some embodiments may use an average of the two values, calculated using an averaging function, as the overall raw attention score. The high, medium, and low values in Table 1 may be replaced with corresponding numerical values in some embodiments, and the averaging function may be, e.g., a mean or a weighted average. It will be appreciated that the raw attention values, as well as the pitch and yaw ranges, provided in Table 1 are provided merely as examples and various embodiments may use different values and ranges, as well as potentially using other data such as head tilt (about an axis passing through the front of the nose and out the back of the head), eye tracking information, or other data included in or derivable from the attendee data, to determine a raw attention level.

At 720, the attention monitoring system processes the previous L raw attention levels $A_{(k/n)-L+1}$ through $A_{(k/n)}$ to calculate a smoothed attention level $b,$ and a value $B_{(k/n)}$ is set to $B_{(k/n)} = b$. The processing of the previous L raw attention levels to generate the smoothed attention value $b$ can be based on a mathematical function that may be selected based on a rule-based or machine learning-based algorithm, e.g., a rule-based expert system designed based on collected data, or an algorithm trained using machine learning and training data. In some embodiments, the raw attention level are processed by removing the lowest 10% and highest 10% of raw attention levels from the past L raw attention levels, and then calculating a mean of the remaining samples. It will be appreciated that other smoothing functions may be applied to one or more raw attention levels A to calculate the values of $b$ and $B_{(k/n)}$ in different embodiments.

Once method 700 has calculated the values of $b$ and $B_{(k/n)}$ at step 720, it returns to step 706 to receive and process the next frame of presenter data. This may be repeated until all frames of the presenter data corresponding to the presentation period have been processed.

It will be appreciated that method 700 is provided as an example of how to perform step 308 of method 300, and that different embodiments may calculate attendee attention levels at step 308 in different ways.

Returning to FIG. 3, at 310, optionally, the attention monitoring system identifies a plurality of intervals of the presentation period. In different embodiments and different examples, an interval may be a sentence of speech spoken by the presenter, a slide of a slide presentation, a module of a lesson, or any other unit of time within the presentation period. In some embodiments, attendee attention may be monitored separately for each interval, such that the attention monitoring system may generate attention data separately for each interval for the purpose of providing feedback to the presenter or for other purposes.

In some embodiments, a plurality of intervals of the presentation period correspond to a plurality of presenter speech segments. In such embodiments, the presenter data includes audio data, and identifying the plurality of intervals comprises processing the audio data to identify the plurality of presenter speech segments. Speech segments may be sentences in some embodiments. In other embodiments, speech segments may be spoken passages that correspond to individual passages in the textual presentation materials, such as the content of a single slide, the content of a paragraph of the speaker notes, or the content of the written materials for a lesson module. The interval for each sentence can be determined in some embodiments using known automatic speech recognition (ASR) techniques implemented by the speech processing module of the attention monitoring system.

In some embodiments, the plurality of intervals of the presentation period correspond to a plurality of visual presentation segments. In such embodiments, the presenter data includes visual presentation data (such as a video or slide presentation), and identifying the plurality of intervals comprises processing the visual presentation data to identify the plurality of visual presentation segments. In some embodiments, the visual presentation data may include a slide presentation, and the visual presentation segments may be individual slides. In some embodiments, the visual presentation data may include a video showing the presenter writing on a surface such as a whiteboard, and the visual presentation segments may be video segments showing the presenter writing content that corresponds to individual passages in the textual presentation materials, such as the content of a paragraph of the speaker notes or the content of the written materials for a lesson module. The interval for each sentence can be determined in some embodiments using known computer vision (CV) techniques implemented by the video processing module of the attention monitoring system, for example, by checking the frame differences from frame to frame.

It will be appreciated that different embodiments may segment the presentation period into intervals based on various criteria. In some embodiments, a pre-recorded audiovisual presentation may be included in the presenter data, and the pre-recorded audiovisual presentation may contain annotations identifying timestamps delimiting the intervals within the presentation. Various different types of presenter data may be used to identify intervals of the presentation period in various different embodiments.

At 312, optionally, the attention monitoring system processes the attendee data to determine an attendee attention level for each interval during the overlap of the interval and the one or more periods of high attention importance. Thus, for example, the values of *a, A, b,* and/or *B* corresponding to frames or points in time falling within an interval may be used to calculate an attention level for that interval.

Some embodiments calculate an attention level for an interval using the following equation:

$$f(s,t) = \left(\sum_{i=s}^{t} B_i\right)/(t - s + 1) \qquad (\text{Equation 1})$$

wherein $B_i$ is the smoothed attention level at sample *i, s* is a starting frame index of the interval, and *t* is an ending frame index of the interval. The interval [*s,t*] may indicate a sentence, a slide, an entire presentation, or any other interval as described above.

At 314, optionally, the attention monitoring system sends feedback information indicating the attendee attention level to the presenter device. In some embodiments, the feedback information indicates, for each period of high attention importance in the presentation period, an attendee attention level for the attendee, such as one or more smoothed attention levels $B_i$. In some embodiments, the feedback information indicates, for each period of high attention importance in the presentation period, whether the attendee attention level for the period is at least a minimum attendee attention level required for the period, as described above with reference to step 306. In some embodiments, the feedback information indicates an attendee attention level for each interval, the attendee level for each interval being calculated as described above at step 312.

FIG.s 8-9 show example user interface screens of a presenter device visualizing the feedback information sent to the presenter device by the attention monitoring system. It will be appreciated that FIG.s 8-9 are provided simply as examples of user interface screens, and that feedback may be provided to the presenter 110, to the attendees 120, and/or to third parties (such as administrators) through various devices in various forms in different embodiments.

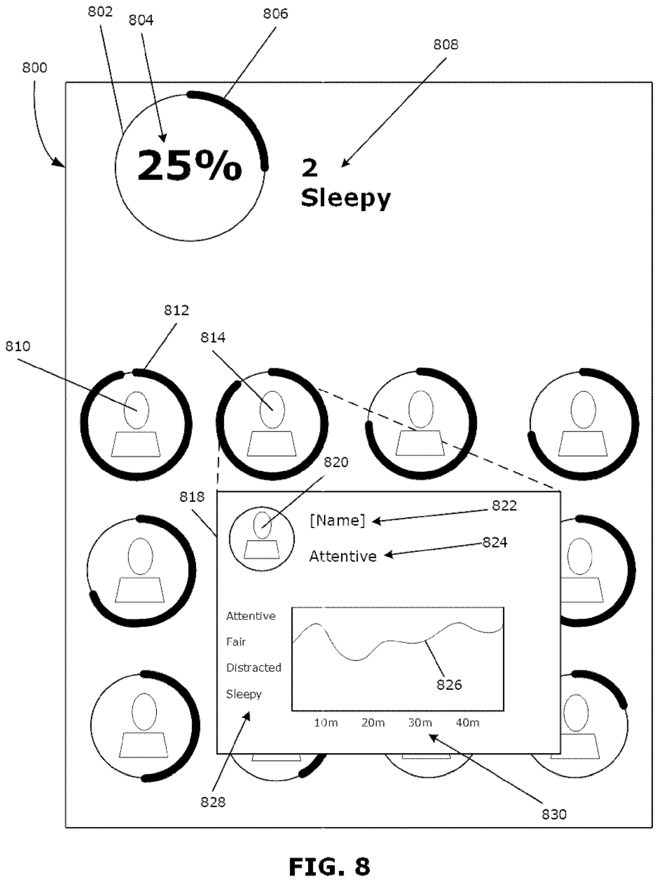

FIG. 8 is a first user interface screen 800 showing the current attention levels of multiple attendees, as well as an overall current attention level.

The screen 800 shows a current class attention level indicator 802 indicating an aggregate attention level for a group of multiple attendees, e.g., a class consisting of multiple students. The current class attention level indicator 802 is shown as a circle containing a textual representation 804 of the current class attention level (shown here as "25%", indicating that 25 percent of attendees of the presentation are in an "attentive" state as defined below), as well as a graphical representation 806 of the current class attention level (shown here as a coloured arc along 25% of the circumference of a circle, indicating that 25 percent of attendees of the presentation are in an attentive state). Supplementary text 808 shows additional indicia of current class attention (shown here are the text "2 sleepy", indicating that 2 of the students in the class are in a "sleepy" state as defined below).

Each attendee is represented by an avatar 810, such as a photo or icon identifying the attendee. The avatar 810 is surrounded by a graphical representation 812 of the attendee's current attention level (e.g., the last B value generated by method 700 for that attendee).

An attendee detail pop-over panel 818 may be shown on the screen 800, e.g., in response to a presenter selecting an attendee's avatar 810 using a pointer device. In this example, a second attendee 814 has been selected, and the second attendee's details are shown in the attendee detail pop-over panel 818, including the second attendee's name 822, avatar 820, and current attention state 824 (as defined below). An attendee attention graph 826 shows the second attendee's attention level (e.g., smoothed attention level B) over time during the presentation period (time shown as the X axis 830). The Y axis 828 of the attendee attention graph 826 divides the attendee attention levels into a plurality of attention states, as defined below.

Attention states as shown in the example screen 800 may be identified by categorizing ranges of the attention level of an attendee, e.g., the *B* value generated by method 700. In this example screen 800, attention level is shown on a scale of 0 to 100, with a top range (e.g., 76-100) being categorized as "attentive", a medium-high range (e.g., 51-75) being categorized as "fair", a medium-low range (e.g., 26-50) being categorized as "distracted", and a bottom range (e.g., 0-25) being categorized as "sleepy". It will be appreciated that various embodiments may categorize or characterize attention levels differently.

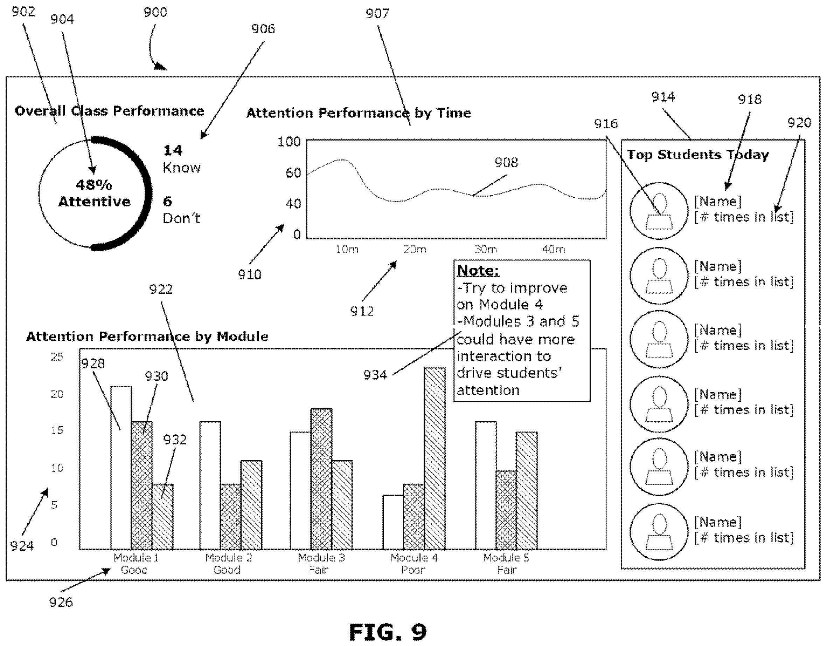

FIG. 9 is a second user interface screen 900 showing the attention levels of multiple attendees over the course of an entire presentation, broken down by interval, as well as a list of top attendees for the presentation based on each attendee's overall attention levels during the presentation.

The screen 900 shows an overall class performance area 902 including a textual and graphical representation 904 of overall class performance (shown here as the text "48% attentive" and a coloured arc around 48% around the circumference of a circle, both indicating that for the entire presentation period 48% of the attendees had an overall attention level of "attentive"). Supplementary text 906 shows additional indicia of current class attention or performance during the presentation (shown here are the text "14 know / 6 don't", indicating that 14 students knew the answers to a problem posed during the presentation and 6 did not know the answer).

The screen 900 shows an attention performance by time area 907 including a graph 908 of overall class attention over the course of the presentation period. The X axis 912 of the graph 908 is time, spanning the presentation period (shown here are approximately 50 minutes). The Y axis 910 of the graph 908 is an overall class attention level ranging from 0 to 100.

The overall class attention over time shown in graph 908 may be calculated in some embodiments by calculating a mean or other aggregation or averaging function of the attention level (e.g., $B$) of each attendee. An overall attendee attention level for the presentation, or for an interval of the presentation, may be similarly calculated by calculating a mean or other aggregation or averaging function of the attention levels (e.g., $B$ values) of the attendee over the entire presentation or interval.

The screen 900 shows a top students area 914 including a list of attendees having a high overall attention level for the presentation relative to the other attendees. Each top student (i.e. attendee having a high overall attention level for the presentation) is shown with his or her avatar 916, name 918, and an indicator 920 of how many times the attendee has been a top student over a period of time such as a semester or over all time to date.

The screen 900 shows an attention performance by module area 922 including a bar graph showing attention metrics for each of a plurality of modules of the presentation. In this example, each module corresponds to an interval of the presentation as defined above with reference to step 310 of method 300. In this screen 900, the X axis 926 shows five modules, each module having a textual identification of overall class attention for the module (e.g., "Good", "Fair", or "Poor"). The overall class attention for a module may be calculated based on some combination of the metrics for the module.

The metrics shown for each module are shown as bars of the bar graph, with height indicating a higher level of that metric as indicated by the Y axis 924, which shows a number of students categorized by that metric. For example, module 1 is shown having "good" performance based on a first metric 928 showing how many students' overall attention performance was "attentive" during module 1, a second metric 930 showing how many students' overall attention performance was "distracted" during module 1, and a third metric 932 showing how many students' overall attention performance was "sleepy" during module 1.

A notes pop-over panel 934 may be shown on the screen 900 to display tips or notes for the presenter 110 on how to potentially improve performance on various modules. In this example, the notes pop-over panel 934 displays the text, "Note: -Try to improve on Module 4 -Modules 3 and 5 could have more interaction to drive students' attention", which may be automatically generated by the attention monitoring system based on the overall performance levels of each module.

In some embodiments, the screen 900 summarizes performance over a plurality of presentations, and the modules shown in the attention performance by module area 922 may each consist of one or more presentations.

In some embodiments, the feedback information may also be sent to the attendee device. This may allow an attendee to monitor his or her attention levels during a presentation, or to review his or her attention levels at the end of a presentation.

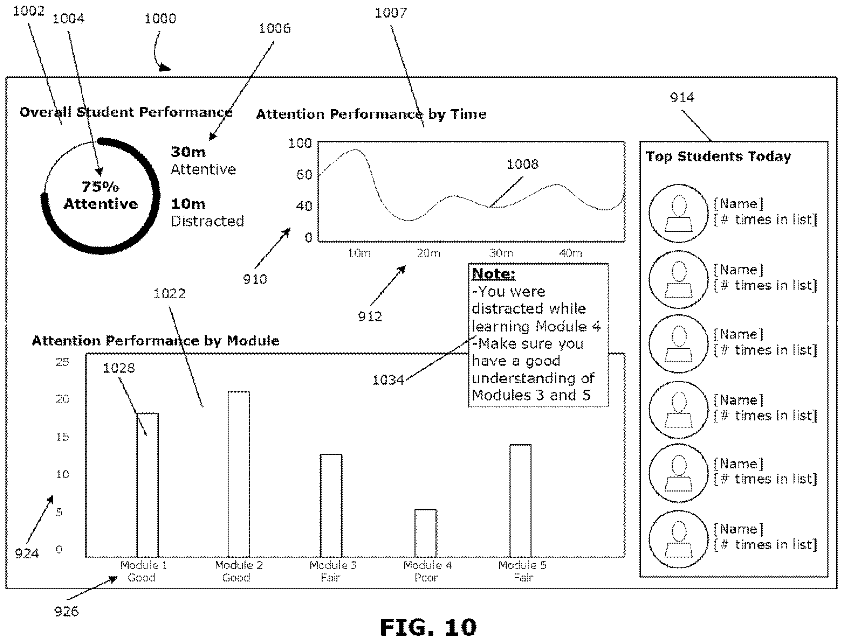

FIG. 10 is a user interface screen 1000 of an attendee device showing the attention levels of a single attendee over the course of an entire presentation, broken down by interval.

The screen 1000 shows an overall student performance area 1002 including a textual and graphical representation 1004 of overall attendee performance (shown here as the text "75% attentive" and a coloured arc around 75% around the circumference of a circle, both indicating that over the entire presentation period the attendee had an overall attention level of "attentive" 75% of the time). Supplementary text 1006 shows additional indicia of attendee attention levels or performance during the presentation (shown here are the text "30m attentive / 10m distracted", indicating that the attendee spent 30 minutes of the presentation period in an "attentive" state and 10 minutes of the presentation period in a "distracted" state).

The screen 1000 shows an attention performance by time area 1007 including a graph 1008 of overall student attention over the course of the presentation period, with axes as per the attention performance by time area 907 of screen 900.

The overall student attention over time shown in graph 1008 may be an attendee attention level (e.g., $B$) of the attendee.

The screen 1000 shows a top students area 914 as in screen 900.

The screen 1000 shows an attention performance by module area 1022 including a bar graph showing attention metrics for each of a plurality of modules of the presentation. In this example, each module corresponds to an interval of the presentation as defined above with reference to step 310 of method 300. In this screen 1000, the X axis 926 shows five modules, each module having a textual identification of overall student attention for the module (e.g., "Good", "Fair", or "Poor"). The overall student attention for a module may be calculated based on the overall attendee attention level during that module.

A notes pop-over panel 1034 may be shown on the screen 1000 to display tips or notes for the attendee 120 on how to potentially improve attention performance on various modules. In this example, the notes pop-over panel 1034 displays the text, "Note: -You were distracted while learning Module 4 -Make sure you have a good understanding of Modules 3 and 5", which may be automatically generated by the attention monitoring system based on the overall performance levels of the attendee for each module.

In some embodiments, the screen 1000 summarizes performance over a plurality of presentations, and the modules shown in the attention performance by module area 1022 may each consist of one or more presentations.

Whereas examples embodiments have been described with reference to monitoring student attention in online learning, it will be appreciated that the techniques described herein can be applied in other domains, including videoconferencing and in-person learning. In some embodiments, the roles of "presenter" and "attendee" may be allocated based on current circumstances during a session: for example, in the context of a videoconference, the "presenter" role may be allocated to the current speaker in a conversation or sequence of presentations by different presenters, the "attendee" roles may be allocated to all participants other than the current speaker, and the described methods may be used to monitor the attention of the participants and provide feedback to the speaker. The described techniques may also be applied in other domains, such as advertising (to monitor a potential customer's attention) or content viewing (e.g., to monitor engagement of a viewer with video entertainment content as part of a content quality rating or content recommendation system).

**General**

Although the present disclosure describes methods and processes with steps in a certain order, one or more steps of the methods and processes may be omitted or altered as appropriate. One or more steps may take place in an order other than that in which they are described, as appropriate.

Although the present disclosure is described, at least in part, in terms of methods, a person of ordinary skill in the art will understand that the present disclosure is also directed to the various components for performing at least some of the aspects and features of the described methods, be it by way of hardware components, software or any combination of the two. Accordingly, the technical solution of the present disclosure may be embodied in the form of a software product. A suitable software product may be stored in a pre-recorded storage device or other similar non-volatile or non-transitory computer readable medium, including DVDs, CD-ROMs, USB flash disk, a removable hard disk, or other storage media, for example. The software product includes instructions tangibly stored thereon that enable a processor device (e.g., a personal computer, a server, or a network device) to execute examples of the methods disclosed herein.

The present disclosure may be embodied in other specific forms without departing from the subject matter of the claims. The described example embodiments are to be considered in all respects as being only illustrative and not restrictive. Selected features from one or more of the above-described embodiments may be combined to create alternative embodiments not explicitly described, features suitable for such combinations being understood within the scope of this disclosure.

All values and sub-ranges within disclosed ranges are also disclosed. Also, although the systems, devices and processes disclosed and shown herein may comprise a specific number of elements/components, the systems, devices and assemblies could be modified to include additional or fewer of such elements/components. For example, although any of the elements/components disclosed may be referenced as being singular, the embodiments disclosed herein could be modified to include a plurality of such elements/components. The subject matter described herein intends to cover and embrace all suitable changes in technology.

**Claims**

1. A method, performed by an attention monitoring system (100), for estimating attendee attention, comprising:

    receiving (302), from a presenter device (110), presenter data corresponding to a presentation period;
    receiving (304), from an attendee device (120), attendee data corresponding to at least a portion of the presentation period;
    processing (306) the presenter data to identify one or more periods of the presentation period as high attention importance and one or more periods of the presentation period as low attention importance;
    processing (308) the attendee data to determine an attendee attention level during the one or more periods of high attention importance; and
    sending (314) feedback information indicating the attendee attention level to the presenter device (110).

2. The method of claim 1, wherein:

the presenter data includes audio data; and

processing (306) the presenter data comprises processing the audio data to determine (406) that a presenter is speaking during the one or more periods of high attention importance.

3. The method of claim 2, wherein processing the audio data to determine (406) that the presenter is speaking comprises processing the audio data to distinguish between speech sounds and non-speech sounds of the audio data.

4. The method of claim 3, wherein:

the presenter data further includes textual presentation data; and
processing the presenter data comprises:

processing the audio data to identify the content of the presenter's speech; and
processing the textual presentation data to determine (408) that the content of the presenter's speech corresponds to the textual presentation data.

5. The method of any one of claims 1 to 4, wherein:

the presenter data includes visual presentation data; and
processing the presenter data comprises processing the visual presentation data to determine that a visual characteristic of the visual presentation data has changed.

6. The method of claim 5, wherein the visual characteristic of the visual presentation data comprises presenter pointer movement.

7. The method of any one of claims 1 to 6, wherein:

the presenter data includes:

visual presentation data indicating content of a visual presentation; and
presenter interaction data indicating an interaction of the speaker with the visual presentation; and

identifying (306) the one or more periods of the presentation period as high attention importance comprises processing the visual presentation data and the presenter interaction data to determine (504) that the presenter is interacting with the visual presentation.

8. The method of any one of claims 1 to 7, wherein:

the attendee data includes video data comprising a plurality of frames of a video of the attendee captured by a camera of the attendee device;
processing the attendee data comprises processing the video data to determine an attendee gaze direction in one or more of the plurality of frames.

9. The method of any one of claims 1 to 8, wherein:

the presenter data includes one or more annotations indicating the one or more periods of high attention importance of the presentation period; and
processing (306) the presenter data comprises processing (604) the annotations to identify the one or more periods of the presentation period as high attention importance.

10. The method of any one of claims 1 to 9, further comprising identifying (310) a plurality of intervals of the presentation period, and
wherein determining the attendee attention level comprises, for each interval:
determining (312) an attendee attention level for the interval during the overlap of the interval and the one or more periods of the presentation period identified as high attention importance.

11. The method of claim 10, further comprising sending (314), to the presenter device, feedback information indicating the attendee attention level for each interval.

**12.** The method of claim 10, wherein:

the plurality of intervals correspond to a plurality of presenter speech segments;
the presenter data includes audio data or visual presentation data;
identifying the plurality of intervals comprises processing the audio data or the visual presentation data to identify the plurality of presenter speech segments.

**13.** The method of any one of claims 1 to 12, wherein identifying (306) one or more periods of high attention importance and one or more periods of low attention importance comprises:

determining an attention importance level for a plurality of periods of the presentation period;
identifying one or more of the plurality of periods of the presentation period as high attention importance when the attention importance level is above an attention importance threshold value; and
identifying one or more of the periods of the presentation period as low attention importance when the attention importance level is below the attention importance threshold value.

**14.** An attention monitoring system (100) for estimating attendee attention, comprising:
a processor device (112);
a memory (206) storing instructions that, when executed by the processor device (112), cause the system (100) to perform the method of any one of claims 1 to 13.

**15.** A processor-readable medium having tangibly stored thereon instruction that, when executed by a processor device (112), cause the processor device (112) to perform the method of any one of claims 1 to 13.

**Patentansprüche**

**1.** Verfahren, durchgeführt durch ein Aufmerksamkeitsüberwachungssystem (100), zum Schätzen einer Teilnehmeraufmerksamkeit, umfassend:

Empfangen (302), von einer Moderatorenvorrichtung (110), von Moderatorendaten, die einem Präsentationszeitraum entsprechen;
Empfangen (304), von einer Teilnehmervorrichtung (120), von Teilnehmerdaten, die zumindest einem Teil des Präsentationszeitraums entsprechen;
Verarbeiten (306) der Moderatorendaten, um einen oder mehrere Zeiträume des Präsentationszeitraums als Zeiträume mit hoher Aufmerksamkeitsbedeutung und einen oder mehrere Zeiträume des Präsentationszeitraums als Zeiträume mit geringer Aufmerksamkeitsbedeutung zu identifizieren;
Verarbeiten (308) der Teilnehmerdaten, um ein Teilnehmeraufmerksamkeitsniveau während des einen oder der mehreren Zeiträume mit hoher Aufmerksamkeitsbedeutung zu bestimmen; und
Senden (314) von Feedback-Informationen, die das Teilnehmeraufmerksamkeitsniveau angeben, an die Moderatorenvorrichtung (110).

**2.** Verfahren nach Anspruch 1, wobei:

die Moderatorendaten Audiodaten beinhalten; und
das Verarbeiten (306) der Moderatorendaten Verarbeiten der Audiodaten, um zu bestimmen (406), dass ein Moderator während des einen oder der mehreren Zeiträume mit hoher Aufmerksamkeitsbedeutung spricht, umfasst.

**3.** Verfahren nach Anspruch 2, wobei das Verarbeiten der Audiodaten, um zu bestimmen (406), dass der Moderator spricht, Verarbeiten der Audiodaten, um zwischen Sprechlauten und Nicht-Sprechlauten der Audiodaten zu unterscheiden, umfasst.

**4.** Verfahren nach Anspruch 3, wobei:

die Moderatorendaten ferner Textpräsentationsdaten beinhalten; und
das Verarbeiten der Moderatorendaten Folgendes umfasst:

Verarbeiten der Audiodaten, um den Inhalt des Moderatorenvortrags zu identifizieren; und
Verarbeiten der Textpräsentationsdaten, um zu bestimmen (408), dass der Inhalt des Moderatorenvortrags den Textpräsentationsdaten entspricht.

5. Verfahren nach einem der Ansprüche 1 bis 4, wobei:

die Moderatorendaten visuelle Präsentationsdaten beinhalten; und
das Verarbeiten der Moderatorendaten Verarbeiten der visuellen Präsentationsdaten, um zu bestimmen, dass sich eine visuelle Eigenschaft der visuellen Präsentationsdaten geändert hat, umfasst.

6. Verfahren nach Anspruch 5, wobei die visuelle Eigenschaft der visuellen Präsentationsdaten eine Moderatoren-Zeigerbewegung umfasst.

7. Verfahren nach einem der Ansprüche 1 bis 6, wobei:
die Moderatorendaten Folgendes beinhalten:

visuelle Präsentationsdaten, die einen Inhalt einer visuellen Präsentation angeben; und
Moderatoren-Interaktionsdaten, die eine Interaktion des Sprechers mit der visuellen Präsentation angeben; und
das Identifizieren (306) des einen oder der mehreren Zeiträume des Präsentationszeitraums als Zeiträume mit hoher Aufmerksamkeitsbedeutung Verarbeiten der visuellen Präsentationsdaten und der Moderatoren-Interaktionsdaten, um zu bestimmen (504), dass der Moderator mit der visuellen Präsentation interagiert, umfasst.

8. Verfahren nach einem der Ansprüche 1 bis 7, wobei:

die Teilnehmerdaten Videodaten, umfassend eine Vielzahl von Frames eines Videos des Teilnehmers, das durch eine Kamera der Teilnehmervorrichtung aufgenommen wurde, beinhalten;
das Verarbeiten der Teilnehmerdaten Verarbeiten der Videodaten, um eine Teilnehmer-Blickrichtung in einem oder mehreren der Vielzahl von Frames zu bestimmen, umfasst.

9. Verfahren nach einem der Ansprüche 1 bis 8, wobei:

die Moderatorendaten eine oder mehrere Anmerkungen beinhalten, die den einen oder die mehreren Zeiträume mit hoher Aufmerksamkeitsbedeutung des Präsentationszeitraums angeben; und
das Verarbeiten (306) der Moderatorendaten Verarbeiten (604) der Anmerkungen, um den einen oder die mehreren Zeiträume des Präsentationszeitraums als Zeiträume mit hoher Aufmerksamkeitsbedeutung zu identifizieren, umfasst.

10. Verfahren nach einem der Ansprüche 1 bis 9, ferner umfassend Identifizieren (310) einer Vielzahl von Intervallen des Präsentationszeitraums, und
wobei das Bestimmen des Teilnehmeraufmerksamkeitsniveaus für jedes Intervall Folgendes umfasst:
Bestimmen (312) eines Teilnehmeraufmerksamkeitsniveaus für das Intervall während der Überlappung des Intervalls und des einen oder der mehreren Zeiträume des Präsentationszeitraums, die als Zeiträume mit hoher Aufmerksamkeitsbedeutung identifiziert wurden.

11. Verfahren nach Anspruch 10, ferner umfassend Senden (314), an die Moderatorenvorrichtung, von Feedback-Informationen, die das Teilnehmeraufmerksamkeitsniveau für jedes Intervall angeben.

12. Verfahren nach Anspruch 10, wobei:

die Vielzahl von Intervallen einer Vielzahl von Moderatoren-Sprechsegmenten entspricht;
die Moderatorendaten Audiodaten oder visuelle Präsentationsdaten beinhalten;
Identifizieren der Vielzahl von Intervallen Verarbeiten der Audiodaten oder der visuellen Präsentationsdaten, um die Vielzahl von Moderatoren-Sprechsegmenten zu identifizieren, umfasst.

13. Verfahren nach einem der Ansprüche 1 bis 12, wobei das Identifizieren (306) eines oder mehrerer Zeiträume mit hoher Aufmerksamkeitsbedeutung und eines oder mehrerer Zeiträume mit geringer Aufmerksamkeitsbedeutung Folgendes umfasst:

Bestimmen eines Aufmerksamkeitsbedeutungsniveaus für eine Vielzahl von Zeiträumen des Präsentationszeitraums;

Identifizieren eines oder mehrerer der Vielzahl von Zeiträumen des Präsentationszeitraums als Zeiträume mit hoher Aufmerksamkeitsbedeutung, wenn das Aufmerksamkeitsbedeutungsniveau über einem Aufmerksamkeitsbedeutungsschwellenwert liegt; und

Identifizieren eines oder mehrerer der Zeiträume des Präsentationszeitraums als Zeiträume mit geringer Aufmerksamkeitsbedeutung, wenn das Aufmerksamkeitsbedeutungsniveau unter dem Aufmerksamkeitsbedeutungsschwellenwert liegt.

**14.** Aufmerksamkeitsüberwachungssystem (100), zum Schätzen einer Teilnehmeraufmerksamkeit, umfassend:

eine Prozessorvorrichtung (112);

einen Speicher (206), der Anweisungen speichert, die, wenn sie durch die Prozessorvorrichtung (112) ausgeführt werden, das System (100) dazu veranlassen, das Verfahren nach einem der Ansprüche 1 bis 13 durchzuführen.

**15.** Prozessorlesbares Medium mit einer physisch drauf gespeicherten Anweisung, die, wenn sie durch eine Prozessorvorrichtung (112) ausgeführt wird, die Prozessorvorrichtung (112) dazu veranlasst, das Verfahren nach einem der Ansprüche 1 bis 13 durchzuführen.

**Revendications**

**1.** Procédé réalisé par un système de surveillance de l'attention (100), pour estimer l'attention de participant, comprenant :

la réception (302), à partir d'un dispositif de présentateur (110), des données de présentateur correspondant à une période de présentation ;

la réception (304), à partir d'un dispositif de participant (120), des données de participant correspondant à au moins une partie de la période de présentation ;

le traitement (306) des données de présentateur pour identifier une ou plusieurs périodes de la période de présentation comme ayant une importance d'attention élevée et une ou plusieurs périodes de la période de présentation comme ayant une importance d'attention faible ;

le traitement (308) des données de participant pour déterminer un niveau d'attention de participant pendant les une ou plusieurs périodes d'importance d'attention élevée ; et

l'envoi (314) d'informations de rétroaction indiquant le niveau d'attention de participant au dispositif de présentateur (110).

**2.** Procédé selon la revendication 1, dans lequel :

les données de présentateur comportent des données audio ; et

le traitement (306) des données de présentateur comprend le traitement des données audio pour déterminer (406) qu'un présentateur parle pendant les une ou plusieurs périodes d'importance d'attention élevée.

**3.** Procédé selon la revendication 2, dans lequel le traitement des données audio pour déterminer (406) que le présentateur parle comprend le traitement des données audio pour distinguer entre les sons vocaux et les sons non vocaux des données audio.

**4.** Procédé selon la revendication 3, dans lequel :

les données de présentateur comportent également des données de présentation textuelles ; et

le traitement des données de présentateur comprend :

le traitement des données audio pour identifier le contenu du discours du présentateur ; et

le traitement des données de présentation textuelle pour déterminer (408) que le contenu du discours du présentateur correspond aux données de présentation textuelle.

**5.** Procédé selon l'une quelconque des revendications 1 à 4, dans lequel :

les données de présentateur comportent des données de présentation visuelle ; et
le traitement des données de présentateur comprend le traitement des données de présentation visuelle pour déterminer qu'une caractéristique visuelle des données de présentation visuelle a changé.

6. Procédé selon la revendication 5, dans lequel la caractéristique visuelle des données de présentation visuelle comprend le mouvement du pointeur du présentateur.

7. Procédé selon l'une quelconque des revendications 1 à 6, dans lequel :
les données de présentateur comportent :

des données de présentation visuelle indiquant le contenu d'une présentation visuelle ; et
des données d'interaction de présentateur indiquant une interaction de l'orateur avec la présentation visuelle ; et
l'identification (306) des une ou plusieurs périodes de la période de présentation comme ayant une importance d'attention élevée comprend le traitement des données de présentation visuelle et des données d'interaction de présentateur pour déterminer (504) que le présentateur interagit avec la présentation visuelle.

8. Procédé selon l'une quelconque des revendications 1 à 7, dans lequel :

les données de participant comportent des données vidéo comprenant une pluralité d'images d'une vidéo du participant capturées par une caméra du dispositif de participant ;
le traitement des données de participant comprend le traitement des données vidéo pour déterminer une direction de regard du participant dans l'une ou plusieurs de la pluralité d'images.

9. Procédé selon l'une quelconque des revendications 1 à 8, dans lequel :

les données de présentateur comportent une ou plusieurs annotations indiquant les une ou plusieurs périodes d'importance d'attention élevée de la période de présentation ; et
le traitement (306) des données de présentateur comprend le traitement (604) des annotations pour identifier les une ou
plusieurs périodes de la période de présentation comme ayant une importance d'attention élevée.

10. Procédé selon l'une quelconque des revendications 1 à 9, comprenant également l'identification (310) d'une pluralité d'intervalles de la période de présentation, et
dans lequel la détermination du niveau d'attention de participant comprend, pour chaque intervalle :

la détermination (312) d'un niveau d'attention de participant pour l'intervalle pendant le chevauchement de l'intervalle et
les une ou plusieurs périodes de la période de présentation identifiées comme ayant une importance d'attention élevée.

11. Procédé selon la revendication 10, comprenant également l'envoi (314), au dispositif de présentateur, d'informations de rétroaction indiquant le niveau d'attention de participant pour chaque intervalle.

12. Procédé selon la revendication 10, dans lequel :

la pluralité d'intervalles correspond à une pluralité de segments de discours du présentateur ;
les données de présentateur comportent des données audio ou des données de présentation visuelle ;
l'identification de la pluralité d'intervalles comprend le traitement des données audio ou des données de présentation visuelle pour identifier la pluralité de segments de discours du présentateur.

13. Procédé selon l'une quelconque des revendications 1 à 12, dans lequel l'identification (306) d'une ou de plusieurs périodes d'importance d'attention élevée et d'une ou de plusieurs périodes d'importance d'attention faible comprend :

la détermination d'un niveau d'importance d'attention pour une pluralité de périodes de la période de présentation ;
l'identification de l'une ou plusieurs de la pluralité de périodes de la période de présentation comme ayant une importance d'attention élevée lorsque le niveau d'importance d'attention est supérieur à une valeur seuil d'importance d'attention ; et

l'identification de l'une ou plusieurs des périodes de la période de présentation comme ayant une importance d'attention faible lorsque le niveau d'importance d'attention est inférieur à la valeur seuil d'importance d'attention.

14. Système de surveillance de l'attention (100), pour estimer l'attention de participant, comprenant :

un dispositif de processeur (112) ;
une mémoire (206) stockant des instructions qui, lorsqu'elles sont exécutées par le dispositif processeur (112), amènent le système (100) à réaliser le procédé selon l'une quelconque des revendications 1 à 13.

15. Support lisible par processeur sur lequel sont stockées de manière tangible des instructions qui, lorsqu'elles sont exécutées par un dispositif de processeur (112), amènent le dispositif de processeur (112) à réaliser le procédé selon l'une quelconque des revendications 1 à 13.

**FIG. 1**

EP 4 201 041 B1

FIG. 2A

EP 4 201 041 B1

FIG. 2B

300

302 Receive presenter data

304 Receive attendee data

306 Identify periods of high and low attention importance by processing presenter data

308 Determine attendee attention level during high attention importance periods by processing attendee data

310 Identify intervals

312 Determine attendee attention level for each interval

314 Send feedback information to presenter device

# FIG. 3

400

**402** Receive presenter data including audio data and textual presentation data

**404** Sound level > sound level threshold?

No → **412** Attention importance level = very low

Yes ↓

**406** Presenter is speaking?

No → **414** Attention importance level = low

Yes ↓

**408** Presenter speech content corresponds to textual presentation data?

No → **416** Attention importance level = medium

Yes ↓

**410** Attention importance level = high

# FIG. 4

500

502 Receive presenter data including visual presentation and presentation interaction data

504 Presenter interacting with visual presentation?

No

508 Attention importance level = low

Yes

506 Attention importance level = high

**FIG. 5**

600

602 Receive presenter data including annotations

604
Annotations
indicate high importance
period?

No → 608 Attention importance
level = low

Yes

606 Attention
importance level = high

# FIG. 6

FIG. 7

**FIG. 8**

**FIG. 9**

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150099255 A1

- US 20150270983 A1

**Non-patent literature cited in the description**

- **MONKARESI, H.** ; **BOSCH, N.** ; **CALVO, R. A.** ; **D'MELLO, S. K.** Automated detection of engagement using video-based estimation of facial expressions and heart rate. *IEEE Transactions on Affective Computing*, 2016, vol. 8 (1), 15-28